# EUROPÄISCHE PATENTSCHRIFT

(11) **EP 1 268 266 B1**
(45) Veröffentlichungstag und Bekanntmachung des Hinweises auf die Patenterteilung: **14.04.2004**
(21) Anmeldenummer: 01911464.4
(22) Anmeldetag: 05.01.2001
(51) Int. Cl.: B62K 25/04, B62K 25/08, B62K 25/30

(54) **FAHRRAD**
BICYCLE
VELO

(30) Priorität: 20.03.2000 DE 20005224 U; 25.05.2000 DE 10025901
(43) Veröffentlichungstag der Anmeldung: 02.01.2003
(60) Teilanmeldung: 02027859.4
(73) Patentinhaber: Felsl, Andreas, 85540 Haar/Gronsdorf (DE); Albrecht, Stephan, 83627 Warngau (DE)
(72) Erfinder: Felsl, Andreas, 85540 Haar/Gronsdorf (DE); Albrecht, Stephan, 83627 Warngau (DE)
(74) Vertreter: Jehle, Volker Armin, Dipl.-Ing.
(86) Internationale Anmeldenummer: PCT/EP2001/000074
(87) Internationale Veröffentlichungsnummer: WO 2001/070563

(56) Entgegenhaltungen:
- EP-A- 0 594 817
- DE-A- 4 123 643
- DE-U- 29 810 431
- US-A- 5 860 660

## Beschreibung

Die vorliegende Erfindung betrifft ein Fahrrad gemäß dem Oberbegriff des Patentanspruchs 1. Ein derartiges Fahrrad ist aus der WO93/23283 bekannt.

Ein weiteres Fahrrad ist aus der WO 99/03721 bekannt. Das dort beschriebene Fahrrad weist eine pneumatisch gefederte Vordergabel mit zwei Gabelbeinen sowie eine pneumatisch gefederte Hinterradaufhängung auf, die jeweils durch doppelt wirkende Pneumatikzylinder gebildet sind. Ein im Zylinderinneren angeordneter Kolben unterteilt die Pneumatikzylinder jeweils in einen ersten Zylinderraum und in einen zweiten Zylinderraum. Der erste Zylinderraum bildet eine erste Gasdruckfeder und wirkt einem "Einfedern" der Gabel bzw. Hinterradaufhängung entgegen, und der zweite Zylinderraum bildet eine zweite Gasdruckfeder, die einem "Ausfedern" entgegenwirkt. Die Pneumatikzylinder weisen jeweils Ventile zum separaten Befüllen bzw. Entlüften der ersten und zweiten Zylinderräume auf, was eine Längenverstellung bzw. eine Variierung der "Federhärte" ermöglicht.

Aus der DE 298 10 431 U1 ist ein sog. "Mountainbike" bekannt, das sich insbesondere für Fahrten im bergigen Gelände eignet. Es weist eine gefederte Vordergabel mit teleskopartig ausziehbaren Gabelbeinen auf, deren Länge stufenweise einstellbar ist. Zur Fixierung der eingestellten "Gabellänge" bzw. "Gabelhöhe" ist an jedem der Gabelbeine ein Arretierungsstift vorgesehen. Im Innern der teleskopartigen Gabelbeine ist eine Spiralfeder angeordnet, die Stöße, die über das Vorderrad eingeleitet werden, zumindest teilweise abfedert und den Fahrkomfort verbessert. Das Hinterrad ist an einer um die Tretlagerachse schwenkbaren Hinterradschwinge gelagert, wobei die Hinterradschwinge durch ein Federbein zur Aufnahme von Druckkräften gegenüber dem Rahmen abgestützt ist. Die Befestigung des Federbeins am Rahmen erfolgt durch Schnellspannmittel, wobei mehrere "Befestigungspunkte" vorgesehen sind, was eine stufenweise Verstellung des Winkels zwischen der Hinterradschwinge und dem Rahmen, d.h. eine stufenweise "Höhenverstellung" des Hinterrades ermöglicht. Durch die individuelle "Höhenverstellbarkeit" von Vorderradund Hinterradaufhängung kann sowohl beim Bergauffahren als auch beim Bergabfahren eine annähernd horizontale Sitzposition eingestellt werden. Insbesondere beim Bergabfahren ist es von Vorteil, wenn das Vorderrad "ausgefahren" und das Hinterrad "eingefahren" ist, da sich hierdurch der Schwerpunkt nach hinten verlagert und die Überschlaggefahr beim Betätigen der Vorderradbremse verringert. Weiterhin ist es beim Bergauffahren von Vorteil, daß das vordere Federelement eingefahren und das hintere ausgefahren ist, um den Schwerpunkt des Fahrers weiter nach vorne zu verlagern. Dadurch nimmt der Fahrer eine entspanntere Haltung ein und erhöht den Wirkungsgrad bei Berganstiegen.

Aus der DE 41 01 745 A1 ist ein Fahrrad mit einer gefederten Hinterradschwinge bekannt, die über ein biegeelastisches Federelement mit dem Fahrradrahmen verbunden ist, wobei eine Feststelleinrichtung mit einem Seilzug zum Feststellen der Federung vorgesehen ist.

Aus der US 6,044,940, US 2,115,072, US 4,159,105 sind pneumatische bzw. hydraulische Kolben-/Zylinderanordnungen bekannt, die als Feder- bzw. Dämpfungselement eingesetzt werden.

Ferner ist aus der DE 198 55 161 C1 eine Höhenverstellvorrichtung mit einer Zugfeder bekannt zur Höhenverstellung einer Sattelstütze eines Fahrrads.

Aus der US 5,086,866 ist ein Geländemotorrad bekannt, bei dem die Vorderrad- und die Hinterradaufhängung durch eine hydraulische Hebevorrichtung höhenverstellbar ist, wobei zur Erzeugung eines Hydraulikdrucks eine Druckerzeugungseinrichtung vorgesehen ist. Die Höhenverstellung der Vorderradaufhängung und der Hinterradaufhängung erfolgt simultan, so daß der Rahmen im wesentlichen horizontal ausgerichtet bleibt.

Aus der US 4,735,276 ist ein Rennmotorrad mit pneumatisch höhenverstellbarer Vorderradgabel bekannt, wobei die Gabel vor dem Start vollständig abgesenkt wird, um während der Startphase ein Abheben des Vorderrads zu vermeiden. Während der Fahrt wird das Vorderrad dann pneumatisch auf eine normale Höhe ausgefahren.

Aufgabe der vorliegenden Erfindung ist es, eine Verstelleinrichtung zu schaffen, die einfach und komfortabel verstellbar und die vielseitig einsetzbar ist, insbesondere zur Höhenverstellung der Vorderradaufhängung, der Hinterradaufhängung, des Sattels bzw. des Lenkervorbaus eines Fahrrads.

Diese Aufgabe wird durch die Merkmale des Patentanspruchs 1 gelöst. Vorteilhafte Ausgestaltungen und Weiterbildungen der Erfindung sind den Unteransprüchen zu entnehmen.

Das Grundprinzip der Erfindung besteht in einer mechanischen Verstelleinrichtung mit mindestens einer doppelt wirkenden Kolben-/Zylinderanordnung, die "automatisch" ausfahrbar ist.

Es sind mindestens zwei Verstelleinrichtungen vorgesehen, z.B. die Höhenverstelleinrichtungen der Vorderradaufhängung und der Hinterradaufhängung, die so gekoppelt sind, daß beim "Einfahren" des Vorderrades "automatisch" das Hinterrad "ausgefahren" wird und umgekehrt.

Die Verstelleinrichtungen zur Höhenverstellung der Vorderradund Hinterradaufhängung weisen jeweils mindestens eine doppelt wirkende Kolben-/Zylinderanordnung mit je einer "Pluskammer" und einer "Minuskammer" auf, die über Druckmittelleitungen und mindestens ein Absperrorgan gekoppelt sind. Zum Verstellen der Fahrneigung wird das Absperrorgan geöffnet. Durch Niederdrücken des Lenkers bzw. durch Gewichtsverlagerung des Fahrers wird die Kolben-/Zylinderanordnung des Vorderrades eingefahren, wodurch sich die "Vorderradhöhe" verringert und die Kolben-/Zylinderanordnung des Hinterrades ausgefahren wird. Hierbei strömt Druckmittel von der Pluskammer der "vorderen" Kolben-/ Zylinderanordnung in die Pluskammer der "hinteren" Kolben-/Zylinderanordnung und von der Minuskammer der hinteren Kolben-/Zylinderanordnung in die Minuskammer der vorderen. Der "Plus-" und der "Minuskreis" können etwa den gleichen Druck haben.

In umgekehrter Weise kann durch Niederdrücken des Rahmens im hinteren Bereich die Kolben-/Zylinderanordnung des Hinterrades eingefahren und die Kolben-/Zylinderanordnung des Vorderrades ausgefahren werden, wodurch sich die Vorderradgabel und der Federweg verlängert. Nach erfolgter Einstellung wird das Absperrorgan wieder geschlossen.

Es sind die Kolben-/Zylinderanordnungen und die Druckmittelleitungen mit einem Gas, wie z.B. mit Luft, gefüllt. Die Kolben-/Zylinderanordnungen dienen dann zusätzlich als "pneumatische Federbeine", wodurch sich der Fahrkomfort, insbesondere beim Bergaufoder Bergabfahren im Gelände, erhöht.

Nach einer Weiterbildung der Erfindung ist eine Feststelleinrichtung zum Feststellen der Kolben-/Zylinderanordnung des Hinterrades vorgesehen. Wahlweise kann auch für die Kolben-/Zylinderanordnung des Vorderrades eine entsprechende Feststelleinrichtung vorgesehen sein. Die Feststelleinrichtung kann beispielsweise ein doppelt wirkender Hydraulikzylinder sein, der in das Gehäuse der zur Höhenverstellung vorgesehenen Kolben-/Zylinderanordnung integriert ist und z.B. mit Öl gefüllt ist. Zwei Kammern des Hydraulikzylinders sind über eine Hydraulikleitung und ein Absperrorgan miteinander verbunden, wobei durch Absperren des Absperrorgans eine "hydraulische" Feststellung möglich ist. Alternativ zu einem doppelt wirkenden Hydraulikzylinder kann auch eine mechanische Feststelleinrichtung vorgesehen sein. Auch kann der Hydraulikzylinder nur eine Kammer haben, die über ein Absperrventil mit einem Hydraulikbehälter verbunden ist.

Nach einer Weiterbildung der Erfindung sind in den beiden Druckmittelleitungen, die die Kolben-/Zylinderanordnungen verbinden, jeweils ein Absperrorgan vorgesehen. Vorzugsweise sind diese beiden Absperrorgane durch ein gemeinsames Betätigungselement betätigbar. Ferner kann auch ein einziges Betätigungselement für die Absperrorgane und die Feststelleinrichtung vorgesehen sein. Weiter können beide Druckmittelleitungen über eine absperrbare Bypassleitung miteinander verbunden sein, um in beiden Druckkreisen den Druck auszugleichen.

Nach einer Weiterbildung der Erf indung ist an der Vorderradaufhängung und/oder an der Hinterradaufhängung ein Federelement vorgesehen. Die Federung kann durch pneumatische Kolben-/Zylinderanordnungen und/oder durch separate bzw. zusätzliche Federelemente erreicht werden. Die Federeinrichtungen der Vorderrad- und/oder der Hinterradaufhängung können also von Verstelleinrichtungen "entkoppelt" werden. Bei "separat" vorgesehenen Federeinrichtungen könnte die Höhenverstellung dann auch hydraulisch erfolgen. Als Federelemente können z.B. Druckfedern oder Elastomerelemente verwendet werden. Die mechanischen Federelemente können auch in die Kolben-/Zylinderanordnung der Vorderrad- bzw. Hinterradaufhängung integriert sein. Beispielsweise kann ein Federelement in die Pluskammer der Kolben-/Zylinderanordnung eingesetzt sein. Bei starken Stößen, bei denen der "pneumatische" Federweg voll ausgenutzt wird, läßt sich dadurch eine zusätzliche mechanische Federwirkung erreichen. Alternativ dazu ist auch eine Anordnung außerhalb der Kolben-/Zylinderanordnung möglich.

Nach einer Weiterbildung der Erfindung ist ein Füll-/Entleerungsventil zum Befüllen bzw. Entleeren der Kolben-/Zylinderanordnungen bzw. der Druckmittelleitungen vorgesehen. Das Füllventil kann ein Rückschlagventil sein, das erst bei einem vorgegebenen Druck öffnet, wobei der Druck einstellbar sein kann. Dadurch kann die "pneumatische Federhärte" entsprechend dem Gewicht des Fahrers und dem gewünschten Fahrkomfort eingestellt werden. Vorzugsweise ist ein Druckluftspeicher, z.B. eine Preßluftflasche, vorgesehen, der in den Rahmen des Fahrrades integriert sein kann, was sehr platzsparend ist. Zusätzlich kann ein Drucklufterzeuger vorgesehen sein, der vorzugsweise so angeordnet ist, daß durch Einfedern des Vorderrades bzw. des Hinterrades Umgebungsluft angesaugt und in den Druckluftspeicher bzw. in die Kolben-/Zylinderanordnungen gepreßt wird, wobei z.B. ein Drucklufterzeuger verwendet werden kann, der nach dem Prinzip einer Luftpumpe arbeitet.

Nach einer Weiterbildung der Erfindung weist das Fahrrad eine Gabel auf, wobei beide Gabelbeine jeweils durch eine Kolben-/Zylinderanordnung gebildet sind. Das Hinterrad kann an einer Hinterradschwinge gelagert sein, die über ein Schwenkgelenk und die Kolben-/Zylinderanordnung zur Höhenverstellung des Hinterrades mit dem Rahmen verbunden ist.

Es können auch zwei durch einen Kolben voneinander separierte Zylinderräume der Kolben-/Zylinderanordnung, d.h. eine "Pluskammer" und eine "Minuskammer" über einen Fluidkanal miteinander verbunden sein, wodurch ein Druckausgleich herbeigeführt werden kann.

An einer der beiden Kolbenseiten ist eine Kolbenstange befestigt, die aus der Kolben-/Zylinderanordnung herausgeführt und axial verschieblich ist. Somit unterscheidet sich die Größe der wirksamen Kolbenfläche der Pluskammer von der wirksamen Kolbenfläche der Minuskammer, und zwar um die Querschnittsfläche der Kolbenstange. Aufgrund der unterschiedlich großen wirksamen Kolbenflächen ergibt sich auch bei gleich großem Druck in den beiden Zylinderkammern eine "Differenzkraft" auf den Kolben bzw. auf die Kolbenstange, was ein automatisches Ausfahren der Verstelleinrichtung ermöglicht.

Es können den beiden Zylinderräumen ebenfalls verschieden große wirksame Kolbenflächen zugeordnet sein, jedoch sind hier die Zylinderräume permanent durch den Kolben voneinander getrennt. Ferner kann stets eine Feststelleinrichtung zum Feststellen des Kolbens vorgesehen. Diese Variante ist daher insbesondere als Verstelleinrichtung für einen Sattel bzw. einen Lenkervorbau eines Fahrrads geeignet, wo eine mechanische Feststellung zwingend erforderlich ist.

Die Verstelleinrichtung gemäß der Erfindung ist vielseitig einsetzbar, z.B. zur Höhenverstellung der Vorderradaufhängung, der Hinterradaufhängung, des Sattels oder des Lenkervorbaus. Ein wesentlicher Vorteil besteht darin, daß die Verstelleinrichtung durch in der Kolben-/Zylinderanordnung gespeicherte Druckenergie automatisch ausfahrbar ist.

Im folgenden wird die Erfindung anhand von Ausführungsbeispielen im Zusammenhang mit der Zeichnung näher erläutert.
Es zeigen:
- Fig. 1: ein erstes Ausführungsbeispiel einer Verstelleinrichtung;
- Fig. 2: ein zweites Ausführungsbeispiel einer Verstelleinrichtung;
- Fig. 3: ein Ausführungsbeispiel einer Verstelleinrichtung mit einer hydraulischen Feststelleinrichtung und einem Ausgleichsgefäß;
- Fig. 4: ein weiteres Ausführungsbeispiel einer Verstelleinrichtung mit einem Ausgleichsgefäß;
- Fig. 5: ein Ausführungsbeispiel einer Verstelleinrichtung mit einer mechanischen Ausgleichsvorrichtung;
- Fig. 6: eine schematische Darstellung einer Variante der Erfindung;
- Fig. 7: ein Fahrrad gemäß der Erfindung;
- Fig. 8: die Kolben-/Zylinderanordnungen des Ausführungsbeispiels der Fig. 7 in vergrößerter Darstellung;
- Fig. 9: ein weiteres Ausführungsbeispiel gemäß der Erfindung;
- Fig. 10: eine Modifikation der Feststelleinrichtung;
- Fig. 11-15: weitere Ausführungsbeispiele gemäß der Erfindung;
- Fig. 16: eine Verstellvorrichtung zur Höhenverstellung eines Sattels; und
- Fig. 17: eine weitere Verstellvorrichtung zur Höhenverstellung eines Sattels.

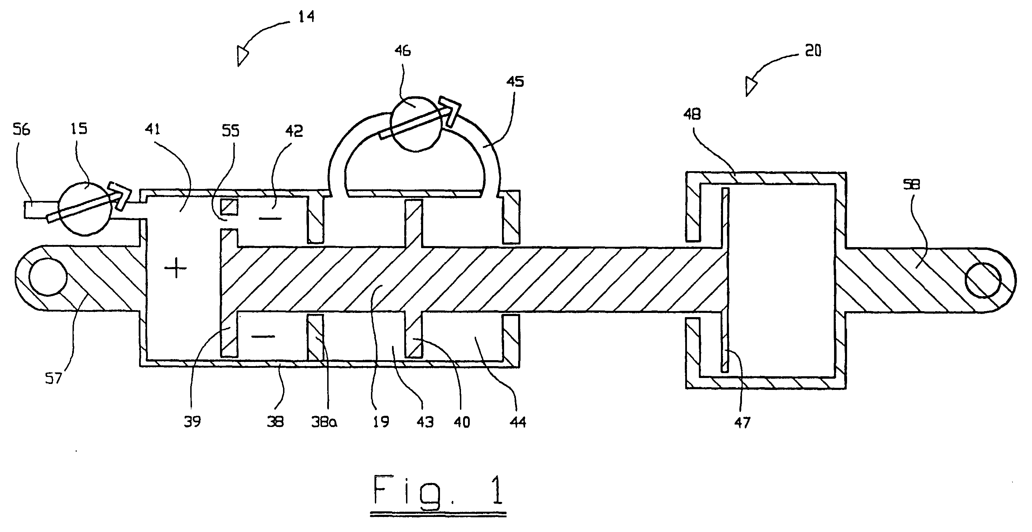

Fig. 1 zeigt eine durch eine Kolbenzylinderanordnung 14 gebildete Verstelleinrichtung und ein "axial" damit verbundenes Feder- bzw. Dämpfungselement 20. Die Kolbenzylinderanordnung 14 weist ein Zylindergehäuse 38 auf, in dem eine Kolbenstange 19 geführt ist. Die Kolbenstange 19 weist an ihrem freien Ende einen Pneumatikkolben 39 auf und einen vom Pneumatikkolben 39 beabstandeten Hydraulikkolben 40.

Der Pneumatikkolben 39 unterteilt das Zylindergehäuse 38 in eine erste pneumatische Zylinderkammer 41, die als "Pluskammer" bezeichnet wird, und in eine zweite pneumatische Zylinderkammer 42, die als "Minuskammer" bezeichnet wird, wobei hier im Pneumatikkolben 39 eine Durchgangsöffnung 55 vorgesehen ist, welche die Pluskammer 41 und die Minuskammer 42 miteinander verbindet. Folglich herrscht hier in der Pluskammer 41 und in der Minuskammer 42 der gleiche Druck. Die zweite pneumatische Zylinderkammer 42 ist durch den Pneumatikkolben 39, das Zylindergehäuse 38 und durch eine Gehäusewand 38a begrenzt, die eine Kolbenöffnung aufweist, durch die die Kolbenstange 19 hindurchgeführt ist.

Ferner ist ein über ein Absperrventil 15 absperrbarer Befüllanschluß 56 vorgesehen, der ein Befüllen der Pluskammer 41 bzw. der damit in Verbindung stehenden Minuskammer 42 ermöglicht. Weiter ist außen am Zylindergehäuse 38 ein Gelenkarm 57 vorgesehen, über den die Verstelleinrichtung gelenkig mit einem anderen Bauteil, z.B. dem Rahmen eines Fahrrads, verbindbar ist.

Vergleicht man die Pluskammer 41 und die Minuskammer 42, so ist ersichtlich, daß die Pluskammer 41 die Form eines Kreiszylinders und die Minuskammer 42 eine "ringzylindrische" Form hat, die durch die Innenseite des Zylindergehäuses 38 und die Kolbenstange 19 begrenzt ist. Mit anderen Worten hat die Pluskammer 41 eine um die Querschnittsfläche der Kolbenstange 19 größere Kolbenfläche als die Minuskammer 42. Wenn in der Pluskammer 41 und in der Minuskammer 42 ein Druck herrscht, der über dem Atmosphärendruck liegt, ergibt sich aufgrund der "Querschnittsflächendifferenz" der Kolbenflächen der Pluskammer 41 und der Minuskammer 42 eine resultierende Kolbenkraft, die gleich dem Produkt des in der Pluskammer 41 bzw. in der Minuskammer 42 herrschenden Drucks und der Querschnittsfläche der Kolbenstange 19 ist (Reibkräfte sind hierbei nicht berücksichtigt). Sofern die Kolbenstange 19 frei im Zylindergehäuse 38 verschieblich ist, wird sie durch die resultierende Druckkraft somit stets in eine "ausgefahrene" Stellung gedrückt, d.h. nach "rechts" in Bezug auf das Zylindergehäuse 38.

Der Hydraulikkolben 40 unterteilt das Zylindergehäuse 38 ferner in eine erste hydraulische Zylinderkammer 43 und eine zweite hydraulische Zylinderkammer 44, die z.B. mit Öl gefüllt sind. Die beiden hydraulischen Zylinderkammern 43, 44 sind über eine Hydraulikleitung 45 miteinander verbunden, die mittels eines Absperrventils 46 absperrbar ist.

Die Kolbenstange 19 ist durch eine Gehäuseöffnung im Bereich der zweiten hydraulischen Zylinderkammer 44 aus dem Zylindergehäuse 38 herausgeführt und weist an ihrem anderen freien Ende einen Federkolben 47 auf, der in einem Gehäuse 48 des Federelements 20 geführt ist. Die "Verstelleinrichtung", d.h. die Kolben-/Zylinderanordnung 14 ist somit von der Federeinrichtung 20 "entkoppelt". Im Innern des Gehäuses 48 kann beispielsweise eine mechanische Feder oder ein Elastomerelement angeordnet sein. Das Gehäuse 48 weist einen Gelenkarm 58 auf zur gelenkigen Verbindung mit einem weiteren Bauteil, z.B. mit der Hinteradschwinge eines Fahrrads.

Im folgenden wird die Funktionsweise näher erläutert.

Bei geschlossenem Absperrventil 46 ist die Kolbenstange 19 aufgrund der Inkompressiblität der in den Hydraulikzylinderkammern 43, 44 befindlichen Hydraulikflüssigkeit "festgestellt", d.h. der Hydraulikzylinder wirkt als Feststelleinrichtung. Die gezeigte Anordnung hat somit nur noch einen axialen Freiheitsgrad, nämlich die Längselastizität des Federelements 20.

Wird das Absperrventil 46 geöffnet, so ist die Kolbenstange 19 frei im Zylindergehäuse 38 verschieblich. Sofern keine "äußeren Kräfte" auf die Gelenkarme 57, 58 ausgeübt werden, fährt die Kolbenstange 19 aufgrund der oben erläuterten resultierenden Druckkraft automatisch aus, wobei die resultierende Druckkraft proportional zu dem in der Pluskammer 41 bzw. in der Minuskammer 42 herrschenden Druck ist. Durch Aufbringen axialer Druckkräfte auf die Gelenkarme 57, 58 kann die Kolbenstange 19 in das Zylindergehäuse 38 eingeschoben und durch Schließen des Absperrventils 46 stufenlos hydraulisch "festgestellt" werden.

Die Verstelleinrichtung ist somit universell einsetzbar, insbesondere bei einem Fahrrad zur Höhenverstellung einer Radaufhängung, des Sattels, Lenkervorbaus etc., was noch ausführlich erläutert wird.

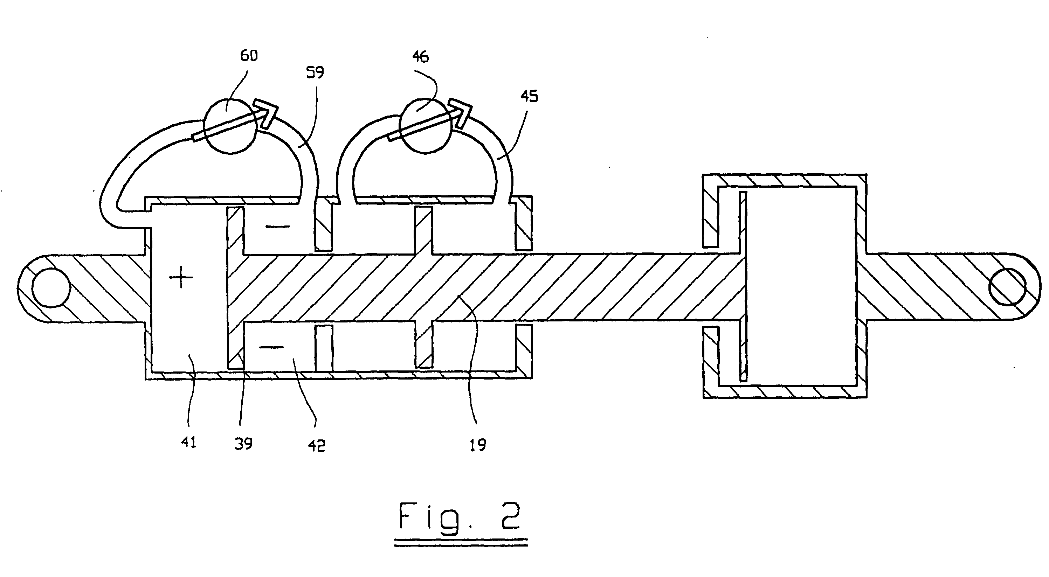

Fig. 2 zeigt eine Variante des Ausführungsbeispiels der Fig. 1, bei der die Pluskammer 41 und die Minuskammer 42 über eine "externe" Pneumatikleitung 59 und ein Absperrventil 60 miteinander verbunden sind. Wenn das Absperrventil 46 der Hydraulikleitung 45 geöffnet und das Absperrventil 60 geschlossen ist, stellt sich am Pneumatikkolben 19 ein Kräftegleichgewicht ein, wobei der Pneumatikkolben 39 eine zwischen seinen beiden Endstellungen liegende Neutralstellung einnimmt. Wird zusätzlich das Absperrventil 60 geöffnet, so daß ein Druckausgleich zwischen der Pluskammer 41 und der Minuskammer 42 stattfinden kann, so fährt der Pneumatikkolben vollständig aus, d.h. er geht in seine "rechte" Endstellung. Das Absperrventil 60 bzw. die Pneumatikleitung 59 kann ferner einen Befüllanschluß (nicht dargestellt) zum Befüllen der Pluskammer 41 bzw. der Minuskammer 42 aufweisen.

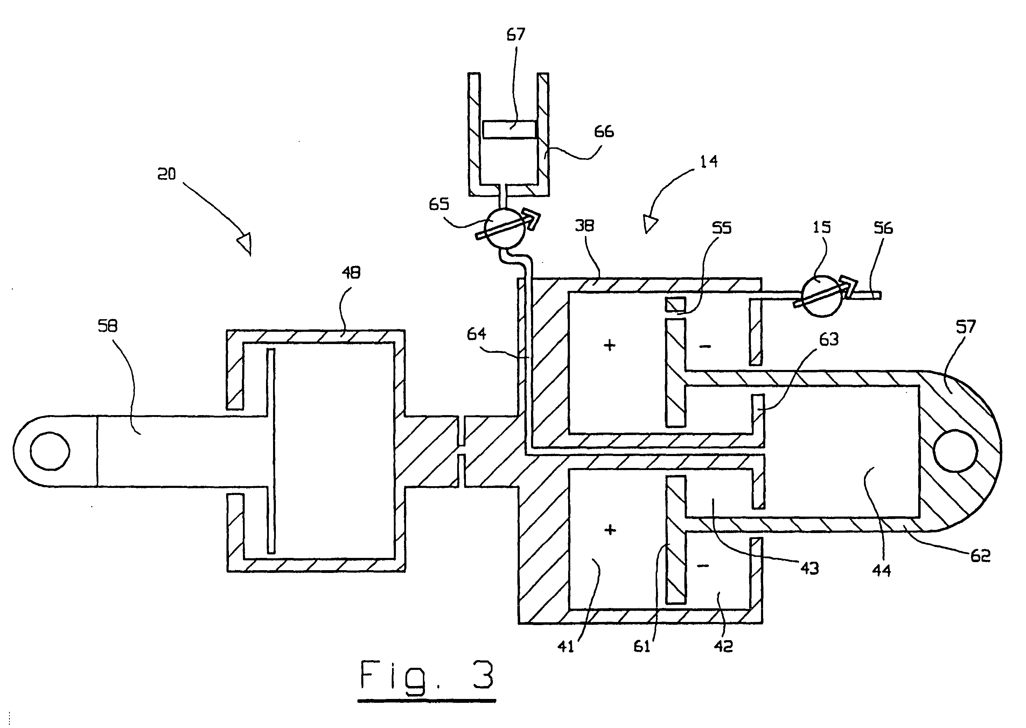

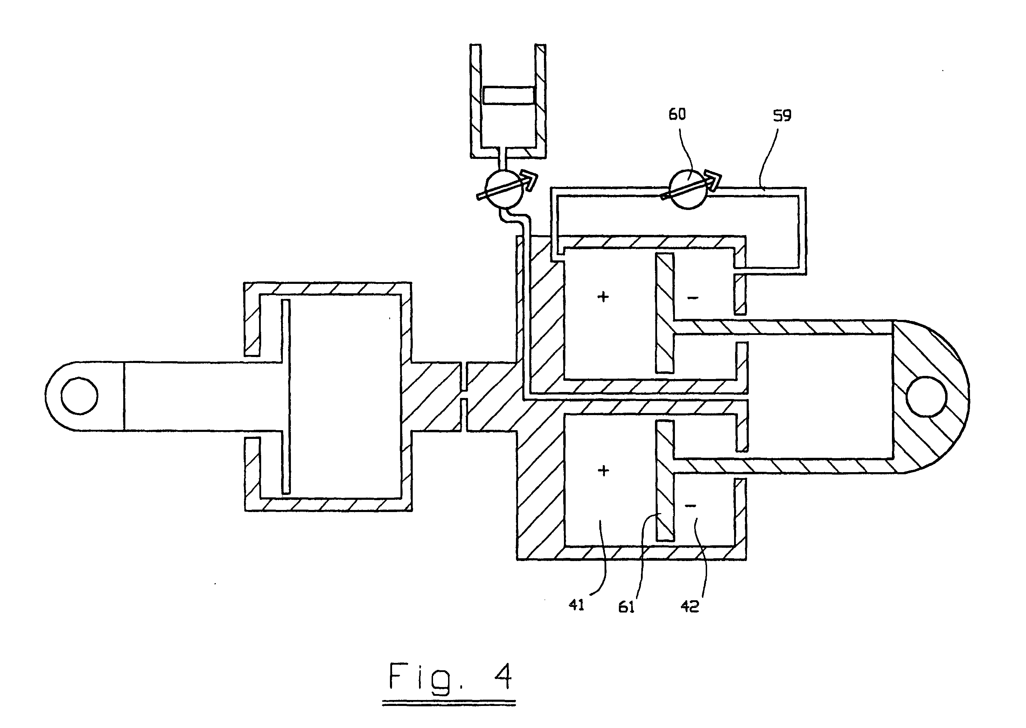

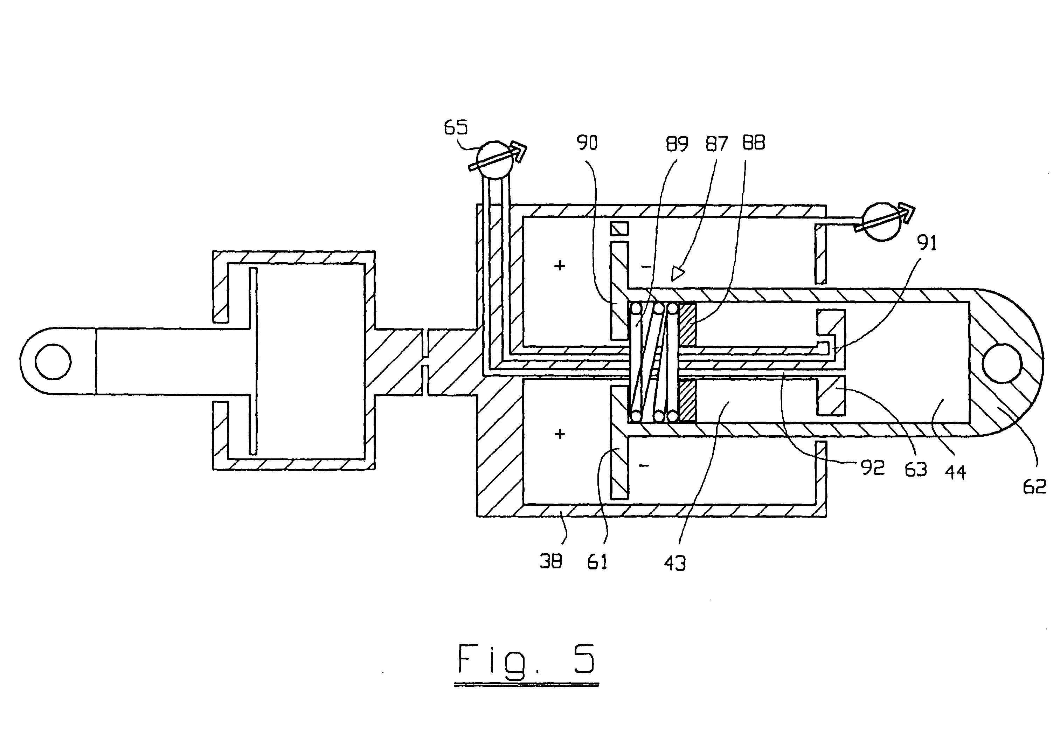

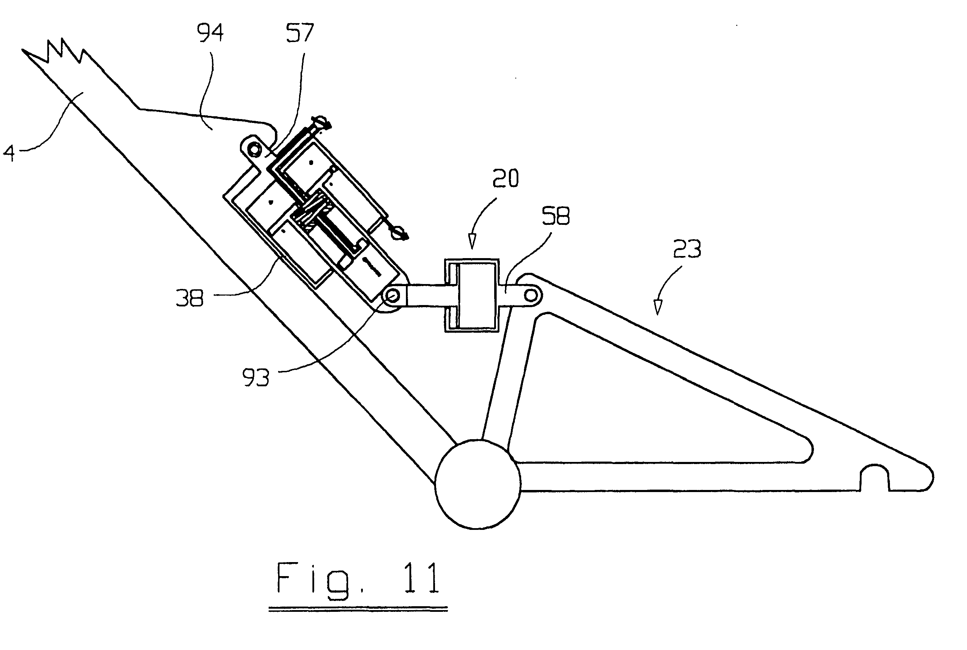

Fig. 3 zeigt ein Ausführungsbeispiel bei dem ebenfalls eine Kolben-/Zylinderanordnung 14 und ein Federelement 20 vorgesehen sind. Das Zylindergehäuse 38 und das Gehäuse 48 des Federelements 20 sind hier einstückig miteinander verbunden. Alternativ dazu kann jedoch auch ein Verbindungsgelenk (nicht dargestellt) vorgesehen sein. Eine derartige Variante mit Verbindungsgelenk wird im Zusammenhang mit Fig. 11 erläutert.

Im Zylindergehäuse 38 ist ein Kolben 61 eines Kolbenelements 62 geführt. Das Kolbenelement 62 bzw. der Kolben 61 unterteilen das Zylindergehäuse 38 in eine ringförmige Pluskammer 41 und eine ringförmige Minuskammer 42, der analog zu den Ausführungsbeispielen der Figuren 1 und 2 eine kleinere Fläche des Kolbens 61 zugeordnet ist als der Pluskammer 41. Analog zu Fig. 1 weist der Kolben 61 eine Durchgangsöffnung 55 auf, welche die Pluskammer 41 und die Minuskammer 42 miteinander verbindet. Ferner sind auch hier ein Befüllanschluß 56 sowie ein zugeordnetes Absperrventil 15 vorgesehen.

Das Zylindergehäuse 38 weist hier ein kolbenförmiges Element 63 auf, das in dem Kolbenteil 62 geführt und Bestandteil einer hydraulischen Kolben-/Zylinderanordnung mit einer ersten hydraulischen Zylinderkammer 43 und einer zweiten hydraulischen Zylinderkammer 44 ist. Die beiden hydraulischen Zylinderkammern 43, 44 sind analog zu Fig. 1 bzw. 2 über eine hydraulische Leitung und ein Absperrventil miteinander verbunden, was hier nicht dargestellt ist. Die hydraulische Leitung und das Absperrventil können beispielsweise in einer zur Zeichenebene, senkrechten Ebene angeordnet sein.

Die zweite hydraulische Zylinderkammer 44 steht ferner über eine im Zylindergehäuse 38 vorgesehene Hydraulikleitung 64 und ein hydraulisches Absperrventil 65 mit einem Ausgleichsgefäß in Verbindung, das hier nur schematisch als Gehäuse 66 mit einem Schwimmer 67 dargestellt ist. Das Ausgleichsgefäß 66 ist erforderlich, da den hydraulischen Zylinderkammern 43, 44 unterschiedlich große Kolbenflächen des kolbenförmigen Endes 63 zugeordnet sind, d.h. bei einer Verschiebung des Kolbenteils 62 muß aus der einen hydraulischen Zylinderkammer ein größeres Volumen abströmen, als in die andere hydraulische Zylinderkammer zuströmt. Das "Differenzvolumen" strömt dann in das Ausgleichsgefäß 66 bzw. vom Ausgleichsgefäß 66 in eine der beiden hydraulischen Zylinderkammern. Durch Absperren des Absperrventils 65 kann das Kolbenelement 62 "festgestellt" werden, wobei ein "Volumenausgleich" über das Ausgleichsgefäß 66 unterbunden ist. Bei geöffnetem Absperrventil 65 hingegen ist eine ungehinderte "Längenverstellung", d.h. eine Verschiebung des Kolbenelements 62 im Zylindergehäuse 38 möglich, wobei auch hier das Kolbenelement 62 "automatisch" ausfährt, wenn der in den Zylinderräumen 41, 42 herrschende Druck größer als der Atmosphärendruck ist und keine bzw. nur geringe äußere Druckkräfte aufgebracht werden.

Alternativ zu dem oben beschriebenen Ausführungsbeispiel müssen die beiden Zylinderkammern 43, 44 nicht unbedingt über eine hydraulische Leitung miteinander verbindbar sein. Die Zylinderkammer 43 kann nämlich auch mit einem Gas bzw. mit Luft gefüllt sein, was dazu führt, daß bei einer Verschiebung des Kolbenteils 62 in der Zylinderkammer 43 ein Überdruck bzw. ein Unterdruck entsteht. Alternativ dazu kann die Zylinderkammer 43 auch zur Atmosphäre hin offen sein, so daß ein ungehinderter Luftaustausch möglich ist. Bei beiden zuletzt genannten Varianten strömt dann bei einer Verschiebung des Kolbenteils 62 nicht ein "Differenzvolumen" sondern das gesamte Hydraulikflüssigkeitsvolumen in das Ausgleichsgefäß 66 bzw. vom Ausgleichsgefäß 66 in die Zylinderkammer 44. Die beiden letztgenannten Varianten haben ferner den Vorteil, daß die wirksame Fläche des kolbenförmigen Endes 63 größer ist als bei der oben beschriebenen Variante. Mit anderen Worten ist die Kolbenfläche, die den Hydraulikdruck erzeugt, größer und hält somit bei kleinerem Druck einer größeren Kraft Stand.

Analog zu den Figuren 1 und 2 sind auch hier Gelenkarme 57, 58 vorgesehen, über die die Verstelleinrichtung gelenkig mit anderen Bauteilen eines Fahrrads verbindbar ist.

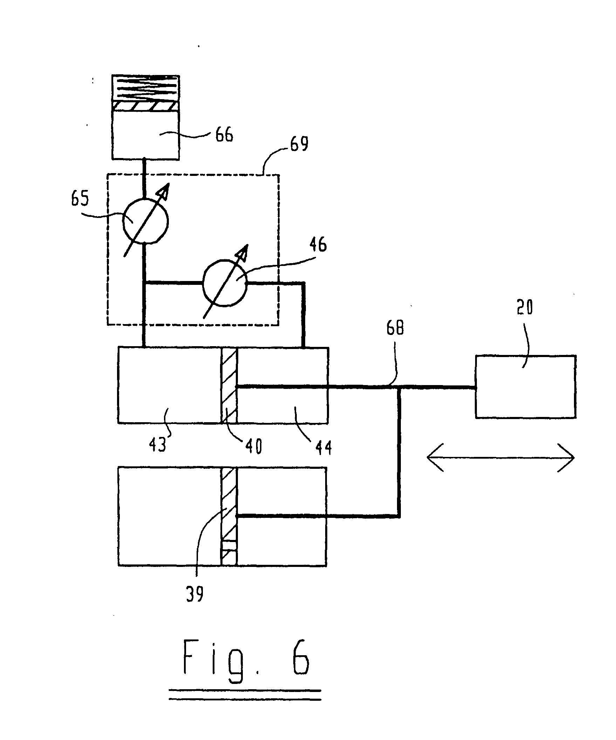

Fig. 4 zeigt eine Variante des Ausführungsbeispieles der Fig. 3, bei dem die Pluskammer 41 und die Minuskammer 42 über eine "externe" Pneumatikleitung 59 und ein Absperrventil 60 miteinander verbunden sind.

Selbstverständlich kann auch hier eine "Befülleitung" (nicht dargestellt) vorgesehen sein zur Befüllung der Pluskammer 41 bzw. der Minuskammer 42 mit einem Gas bzw. mit Luft.

Fig. 5 zeigt ein Ausführungsbeispiel, bei dem für den "Volumenausgleich" zwischen der ersten hydraulischen Zylinderkammer 43 und der zweiten hydraulischen Zylinderkammer 44 eine Ausgleichsvorrichtung 87 vorgesehen ist, die durch einen Ringkolben 88 und eine Feder 89 gebildet ist, die in dem Kolbenelement 62 verschieblich sind. Der im Zylinderraum 43 herrschende Druck drückt auf den Ringkolben 88 entgegen der Druckkraft der Feder 89, die sich an einer Wand 90 des Kolbenelements 62 abstützt. Die Federkraft und der im Zylinderraum 43 herrschende Druck halten sich somit das Gleichgewicht. Der Zylinderraum 43 steht ferner über eine hydraulische Leitung 91 mit dem Absperrventil 65 in Verbindung. Vom Absperrventil 65 führt eine weitere hydraulische Leitung 92 zum Zylinderraum 44. Auch hier dichtet das kolbenförmige Ende 63 den Zylinderraum 43 gegenüber dem Zylinderraum 44 ab.

Bei geöffnetem Absperrventil 65 kann somit das Kolbenelement 62 im Zylindergehäuse 38 verschoben werden. Aufgrund der unterschiedlichen Querschnittsflächen der Zylinderräume 43, 44 ist ein Volumenausgleich erforderlich, der hier durch Verschieben des Ringkolbens 88 erfolgt. Alternativ zu der hier gezeigten mechanischen Feder 89 kann auch eine Luftfeder bzw. eine andere mechanische Feder vorgesehen sein.

Fig. 6 zeigt in schematischer Darstellung, daß der Pneumatikkolben 39 und der Hydraulikkolben 40 alternativ zu den oben beschriebenen Ausführungsbeispielen auch "parallel" angeordnet und über ein axial verschiebliches Gestänge 68 miteinander und mit dem Federelement 20 verbunden sein können. Ferner können das hydraulische Absperrventil 46, über das die hydraulischen Zylinderkammern 43, 44 miteinander verbindbar sind, und das hydraulische Absperrventil 65, über das die hydraulische Zylinderkammer 43 mit dem Ausgleichsgefäß 66 verbindbar ist, in einer gemeinsamen Baueinheit 69, z.B. in einem gemeinsamen Gehäuse, zusammengefaßt sein.

In den nachfolgenden Figuren wird die Erfindung konkret im Zusammenhang mit einem Fahrrad erläutert.

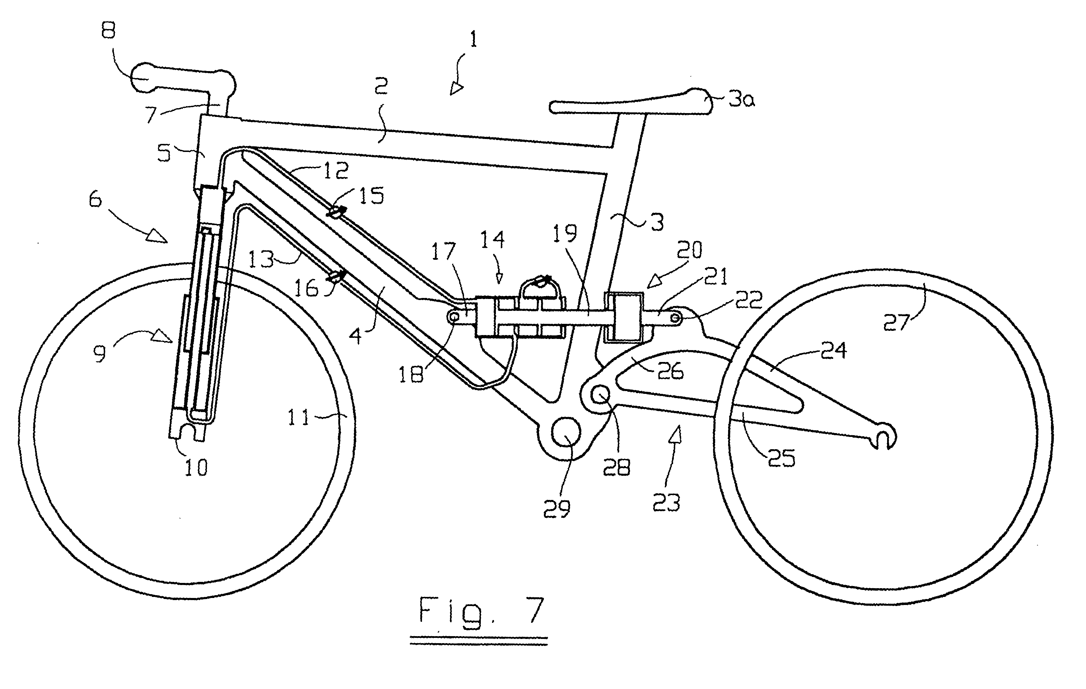

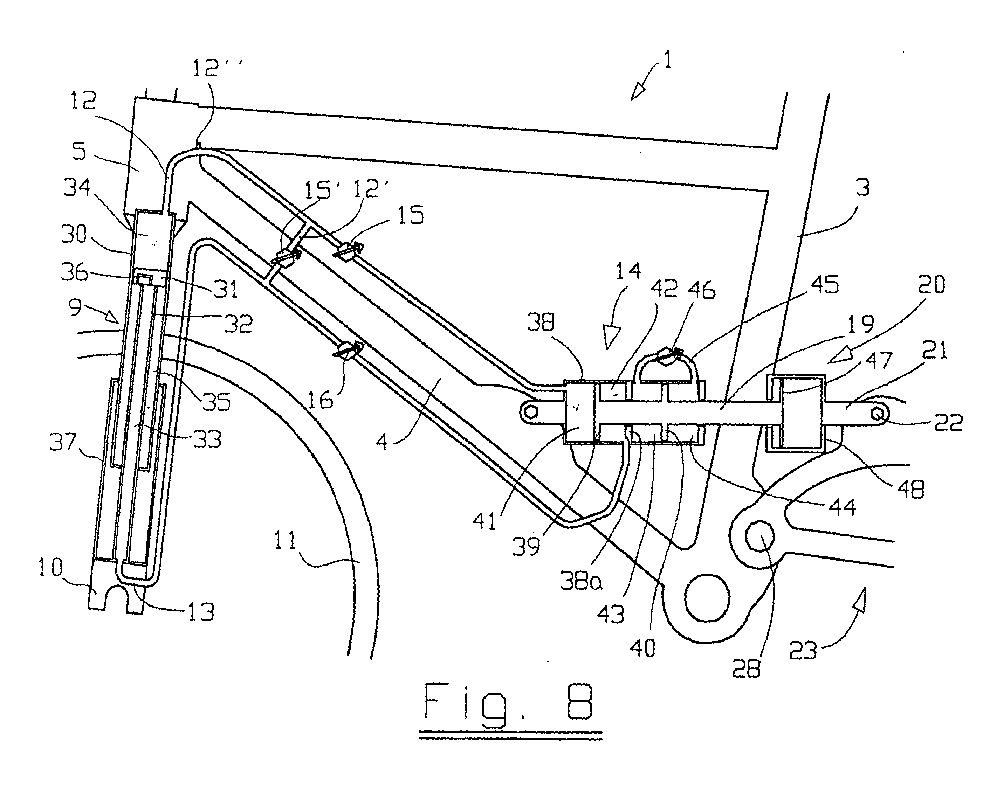

Fig. 7 zeigt ein Fahrrad mit einem Rahmen 1, der eine Längsstange 2, eine Sattelstange 3 und eine Verbindungsstange 4 aufweist. Am gemeinsamen Ende der Längsstange 2 und der Verbindungsstange 4 ist ein Lenkkopflager 5 vorgesehen, in dem drehbar ein Ende einer Vorderradgabel 6 bzw. ein damit verbundener Lenkervorbau 7 gelagert ist, an dem ein Lenker 8 gelagert ist. Die Vorderradgabel 6 weist zwei Gabelbeine auf, wovon hier nur ein Gabelbein zu sehen ist, das durch eine Kolben-/Zylinderanordnung 9 gebildet ist, die im Zusammenhang mit Fig. 8 näher erläutert wird. Alternativ zu dem hier gezeigten Ausführungsbeispiel kann aber auch eine Gabel mit nur einem Gabelbein vorgesehen sein. Am freien Ende 10 der Kolben-/Zylinderanordnung 9 ist ein Vorderrad 11 drehbar gelagert.

Von der Kolben-/Zylinderanordnung 9 führt eine erste Druckmittelleitung 12 und eine zweite Druckmittelleitung 13 zu einer zweiten Kolben-/Zylinderanordnung 14, wobei in der ersten Druckmittelleitung 12 ein erstes Absperrventil 15 und in der zweiten Druckmittelleitung 13 ein zweites Absperrventil 16 vorgesehen ist.

Ein Gehäuseende 17 der zweiten Kolben-/Zylinderanordnung 14 ist über ein Schwenkgelenk 18 mit der Verbindungsstange 4 verbunden.

Eine Kolbenstange 19 der zweiten Kolben-/Zylinderanordnung 14 ist mit einem Federelement 20 verbunden, das ebenfalls im Zusammenhang mit Fig. 8 näher erläutert wird. Ein Ende 21 des Federelementes 20 ist über ein Schwenkgelenk 22 mit einer Hinterradschwinge 23 verbunden, die hier aus drei miteinander verbundenen Stangen 24, 25 und 26 besteht und die zur drehbaren Lagerung eines Hinterrades 27 vorgesehen ist. Die Hinterradschwinge 23 ist über ein Schwenkgelenk 28 mit der Sattelstange 3 verbunden, an deren freiem Ende ein Sattel 3a angeordnet ist. Das Schwenkgelenk 28 ist hier oberhalb eines Tretlagers 29 angeordnet. Alternativ dazu kann das Schwenklager 28 auch so angeordnet sein, daß seine Schwenkachse mit der Drehachse des Tretlagers 29 zusammenfällt.

Fig. 8 zeigt einen vergrößerten Ausschnitt des Fahrrades der Fig. 7.

Die Kolben-/Zylinderanordnung 9 besteht aus einem Pneumatikzylinder 30, in dem ein Kolben 31 angeordnet ist. Der Kolben 31 weist eine Kolbenstange 32 mit einem Kolbenstangeninnenraum 33 auf. Der Kolben 31 unterteilt den Pneumatikzylinder 30 in einen ersten Zylinderraum 34, der als "Pluskammer" bezeichnet werden kann, und einen zweiten Zylinderraum 35, der ringförmig ist und der durch den Pneumatikzylinder 30 und die Kolbenstange 32 begrenzt ist. Der Kolben 31 weist ferner einen Verbindungskanal 36 auf, der den Kolbenstangeninnenraum 33 mit dem zweiten Zylinderraum 35 verbindet und als Düse bzw. Drosselstelle ausgebildet sein kann, um beim Federn eine Dämpfung zu bewirken. Der Kolbenstangeninnenraum 33 und der zweite Zylinderraum 35 bilden zusammen eine "Minuskammer" der Kolben-/Zylinderanordnung. Die "Pluskammer" 34 hat eine um die Querschnittsfläche der Kolbenstange 32 größere Kolbenfläche als die durch den Kolbenstangeninnenraum 33 und den zweiten Zylinderraum 35 gebildete "Minuskammer".

Die Minuskammer dient als stufenlos verstellbare Gegenfeder.

Der Verbindungskanal 36 weist einen relativ kleinen Querschnitt auf und wirkt beim Einfedern bzw. beim Ausfedern als "Drossel" bzw. als "Dämpfungsglied". Der Querschnitt muß allerdings nicht unbedingt klein sein und eine Drosselstelle darstellen.

Das dem Kolben 31 abgewandte Ende der Kolbenstange 32 ist mit einem Führungsrohr 37 verbunden, das zur Führung des Pneumatikzylinders 30 vorgesehen ist. Der Pneumatikzylinder 30 und das Führungsrohr 37 bilden somit ein teleskopartiges Federbein, das hier ein Gabelbein der Vorderradgabel ist. Am freien Ende 10 des Führungsrohrs 37 ist das Vorderrad 11 gelagert.

Die erste Druckmittelleitung 12 ist mit dem ersten Zylinderraum 34 verbunden, und die zweite Druckmittelleitung 13 ist mit dem Kolbenstangeninnenraum 33 verbunden. Der Kolbenstangeninnenraum 33 kann auch als "verlängerte Druckmittelleitung 13" angesehen werden. Über die Absperrventile 15, 16 sind die Druckmittelleitungen 12, 13 mit der zweiten Kolben-/Zylinderanordnung 14 verbunden.

Weiter sind die Druckmittelleitungen 12 und 13 über eine Bypassleitung 12, in die ein Absperrventil 15' eingesetzt ist, miteinander verbindbar, um in beiden Druckkreisen denselben Druck einstellen zu können. Damit benötigt man zum Druckaufbau, d.h. zum "Aufpumpen" auch nur ein Ventil 12'', das an beliebiger Stelle an eine der Leitungen 12, 12' oder 13 angeschlossen ist.

Die "Betätigungselemente" bzw. Ventile 15, 15' können so angeordnet sein, daß sie vom Fahrer auch während der Fahrt leicht erreichbar sind, z.B. im Bereich des Lenkkopflagers 5 bzw. des Lenkers 8.

Die zweite Kolben-/Zylinderanordnung 14 weist ein Zylindergehäuse 38 auf, in dem die Kolbenstange 19 geführt ist. Die Kolbenstange 19 weist einen Pneumatikkolben 39 und einen Hydraulikkolben 40 auf. Der Pneumatikkolben 39 unterteilt das Zylindergehäuse 38 in eine erste pneumatische Zylinderkammer 41, die als "Pluskammer", und eine zweite pneumatische Zylinderkammer 42, die als "Minuskammer" bezeichnet wird.

Auch hier hat die "Pluskammer" 41 eine um die Querschnittsfläche der Kolbenstange 19 größere Kolbenfläche als die "Minuskammer" 42. Da beide "Pluskammern" 34, 41 eine größere Kolbenfläche als die zugeordneten Minuskammern haben, kann eine ausreichend harte "pneumatische Feder" erreicht werden, wobei die Federhärte vom Druck in den Kammern abhängt.

Die zweite pneumatische Zylinderkammer 42 ist durch den Pneumatikkolben 39, das Zylindergehäuse 38 und durch eine Gehäusewand 38a begrenzt, die eine Kolbenöffnung aufweist, durch die die Kolbenstange 19 hindurchgeführt ist. Die erste pneumatische Zylinderkammer 41 ist mit der ersten Druckmittelleitung 12 und die zweite pneumatische Zylinderkammer 42 ist mit der zweiten Druckmittelleitung 13 verbunden.

Der Hydraulikkolben 40 unterteilt das Gehäuse 38 ferner in eine erste hydraulische Zylinderkammer 43 und eine zweite hydraulische Zylinderkammer 44, die z.B. mit Öl gefüllt sind. Die beiden hydraulischen Zylinderkammern 43, 44 sind über eine Hydraulikleitung 45 miteinander verbunden, die mittels eines Absperrventils 46 absperrbar ist.

An dem Pneumatikkolben 39 abgewandten Ende der Kolbenstange 19 ist ein Federkolben 47 vorgesehen, der in einem Gehäuse 48 eines Federelements 20 geführt ist. Die "Verstelleinrichtung", d.h. die Kolben-/Zylinderanordnung 14 des Hinterrades 27 ist somit von der Federeinrichtung 20 vollständig entkoppelt. Eine derartige Entkoppelung wäre auch an der Vorderradgabel möglich. Im Innern des Gehäuses 48 kann beispielsweise eine mechanische Feder oder ein Elastomerelement angeordnet sein. Das Gehäuse 48 ist über das Ende 21 und das Schwenkgelenk 22 mit der Hinterradschwinge 23 verbunden.

Im folgenden wird die Funktionsweise näher erläutert.

Bei geschlossenem Absperrventil 46 ist die Kolbenstange 19 durch die in den Hydraulikzylinderkammern 43, 44 befindliche Hydraulikflüssigkeit festgestellt. Über das Federelement 20 ist die Hinterradschwinge 23 "federnd", d.h. schwenkbar um das Schwenkgelenk 28 mit dem Rahmen 1 verbunden.

Die Kolbenstange 32 bildet mit dem Pneumatikzylinder 30 und dem im ersten Zylinderraum 34 sowie in der ersten Druckmittelleitung 12 eingeschlossenen Gasvolumen eine "pneumatische Feder", wobei der erste Zylinderraum 34 bei geöffnetem Absperrventil 15 mit der ersten pneumatischen Zylinderkammer 41 in Verbindung steht. Beim "Einfedern" der Kolbenstange 32 erhöht sich der Druck im ersten Zylinderraum 34 bzw. in der ersten Druckmittelleitung 12 und der ersten pneumatischen Zylinderkammer 41. Dementsprechend sinkt der Druck in der zweiten Druckmittelleitung 13, dem Kolbenstangeninnenraum 33 und dem zweiten Zylinderraum 35.

Sind die Absperrventile 15, 16 und 46 geöffnet, so kann die Kolbenstange 19 in Richtung der Sattelstange 3 verschoben werden, wobei Hydraulikflüssigkeit aus der Hydraulikzylinderkammer 44 über die Hydraulikleitung 45 in die erste Hydraulikzylinderkammer 43 strömt. Durch das Verschieben der Kolbenstange 19 dreht sich die Hinterachsschwinge 23 im Uhrzeigersinn um das Schwenkgelenk 28, wodurch das Hinterrad "abgesenkt" wird. Mit der Verschiebung der Kolbenstange 19 wird auch der Pneumatikkolben 39 verschoben, was dazu führt, daß Luft von der zweiten pneumatischen Zylinderkammer 42 über die zweite Druckmittelleitung 13 in den Kolbenstangeninnenraum 33 bzw. in die zweite Zylinderkammer 35 strömt. Hierdurch wird der Kolben 31 nach oben gedrückt, was zu einem Überströmen der Luft aus dem ersten Zylinderraum 34 in die erste pneumatische Zylinderkammer 41 führt. Mit der Verschiebung des Kolbens 31 bzw. der Kolbenstange 32 wird der Pneumatikzylinder 31 in das Führungsrohr 37 eingeschoben, wodurch sich die Länge der Vorderradgabel verringert und das Hinterrad "ausgefahren" wird. Diese Gabel- bzw. Hinterradeinstellung ist insbesondere zum Bergauffahren geeignet.

In umgekehrter Weise kann durch Niederdrücken der Sattelstange 31 die Kolbenstange 19 in Richtung der Verbindungsstange 4 verschoben werden, wodurch die Hinterradschwinge entgegen dem Uhrzeigersinn verschwenkt wird und die Länge der Vorderradgabel verlängert wird.

Nach Einstellen einer gewünschten Vorderradhöhe bzw. Hinterradhöhe werden die Absperrventile 15, 16, 46 geschlossen. Durch "Einfahren" der Vorderradgabel 31 und "Ausfahren" des Hinterrades kann eine Sitzposition eingestellt werden, bei der der Fahrer beim Bergauffahren annähernd horizontal sitzt. Dementsprechend kann durch Ausfahren der Vorderradgabel und Einfahren des Hinterrades eine "Bergab-Fahrposition" eingestellt werden.

Alternativ zu der hier gezeigten durch die Hydraulikzylinderkammern 43, 44 und das Absperrventil 46 gebildete "Feststelleinrichtung" kann auch eine "mechanische Arretierungseinrichtung" zum Feststellen des Kolbens 19 vorgesehen sein. Ferner können die Zylinderräume 34, 35, 41 und 42 sowie die Druckmittelleitungen 12, 13 auch mit einer Hydraulikflüssigkeit gefüllt sein. Die Kolben-/Zylinderanordnung 9 ist dann jedoch bei geschlossenen Absperrventilen 15, 16 aufgrund der Inkompressibilität der Hydraulikflüssigkeit starr. Bei dieser Variante kann jedoch eine von der Kolben-/Zylinderanordnung 9 "entkoppelte" mechanische Federung vorgesehen sein, z.B. durch ein Federelement, das die Vorderradgabel federnd mit dem Lenkkopflager 5 verbindet.

Die beiden Absperrventile 15 und 16 und das Absperrventil 15' in der Bypassleitung 12' können ferner so ausgeführt und angeordnet sein, daß sie durch ein gemeinsames Betätigungselement (nicht dargestellt) betätigbar sind. Weiter können die Druckmittelleitungen 12, 13 im Innern des Rahmens 1, d.h. im Innern der Verbindungsstange 4 geführt sein.

Bei dem in Fig. 8 gezeigten Ausführungsbeispiel können die pneumatischen Zylinderkammern 34, 35 der Kolben-/Zylinderanordnung 9 an der Vordergabel und die pneumatischen Zylinderkammern 41, 42 jeweils über eine Druckmittelleitung, in der ein Absperrorgan angeordnet ist, miteinander verbindbar sein. Mittels des Absperrorgans ist dann eine separate, d.h. voneinander unabhängige Verstellung der Kolben-/Zylinderanordnung 9 und der Kolben-/Zylinderanordnung 14 möglich. Durch das Absperrorgan können die Zylinder auf verschiedenen Niveaus festgehalten werden. Diese Variante ist insbesondere von Vorteil, wenn nur eine verstellbare Gabel oder nur ein verstellbarer Hinterbaudämpfer vorgesehen ist.

Alternativ zu dem Ausführungsbeispiel der Fig. 8 kann die Feststelleinrichtung auch einen einfach wirkenden Zylinder aufweisen. Dieser einfach wirkende Zylinder kann z.B. in ein gemeinsames Zylindergehäuse der Kolben-/Zylinderanordnung 14 der Hinterradaufhängung integriert sein. Der einfach wirkende Zylinder kann ferner über eine Druckmittelleitung mit einem Ausgleichsbehälter verbunden sein, in der ein Absperrorgan vorgesehen ist. Mittels des Absperrorgans kann der einfach wirkende Zylinder vom Ausgleichsbehälter getrennt werden. Die Feststelleinrichtung ist somit auch mit einem einfach wirkenden Zylinder, einem Ausgleichsbehälter und einem Absperrorgan realisierbar.

Ferner können die Druckmittelleitungen 12, 13 über eine weitere Druckmittelleitung und einem weiteren Absperrorgan miteinander verbunden sein. Hierdurch kann das gesamte System geöffnet werden, was eine einfache Verstellung der einzelnen Kammern der Kolben-/Zylinderanordnungen ermöglicht.

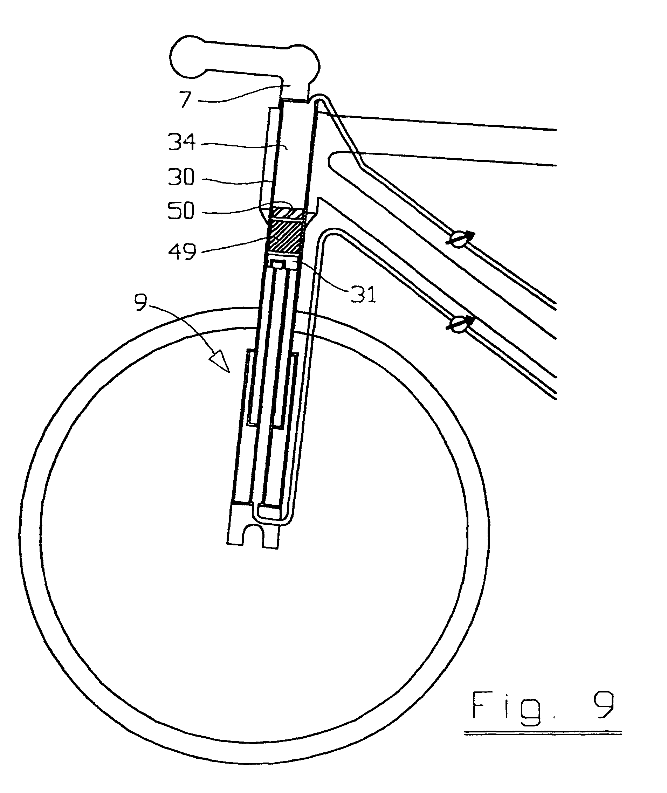

Fig. 9 zeigt eine Variante des Ausführungsbeispiels der Figuren 7 und 8.

Beim Ausführungsbeispiel der Fig. 9 hat der Pneumatikzylinder 30 eine größere Länge als beim Ausführungsbeispiel der Figuren 6 und 7, wodurch sich ein längerer Federweg ergibt. Im Pneumatikzylinder 30 sind oberhalb des Pneumatikkolbens 31 ein Element 49 aus elastischem Material und ferner ein "Schwimmerelement" 50 angeordnet, das den ersten Zylinderraum 34 gegenüber dem Zylinderraum abdichtet, in dem das elastische Element 49 angeordnet ist. Ferner können noch Klemmungen vorgesehen sein, die den Kolben einklemmen würden, wobei die "Länge" nach unten ausziehbar ist.

Das elastische Element 49 verbessert die Federungseigenschaften und dient als Federung in der sogenannten "Uphill-Stellung", d.h. beim Bergauffahren. Beim Bergauffahren ist die Kolben-/Zylinderanordnung 9 nämlich eingefahren, d.h. der erste Zylinderraum 34 hat ein kleineres Volumen als in Fig. 9 bzw. das Volumen Null, wobei das Schwimmerelement 50 dann am lenkerseitigen Ende des Pneumatikzylinders 30 ansteht. In dieser Stellung ist der "Luftfederweg" vergleichsweise klein bzw. Null. Durch das elastische Element 49 kann jedoch eine gewisse "Restfederung" aufrechterhalten werden.

Die "zusätzliche Elastomerkammer" dient also primär als Sicherheitsfederung, insbesondere für den Fall, daß die Kolben-/Zylinderanordnung 9 undicht wird und Luft entweicht. Der Fahrer kommt somit auch bei einem Defekt sicher nach Hause. Diese "Elastomerkammer" federt stets synchron zur Pluskammer 34. Bei der Bergaufstellung ist die Pluskammer 34 "nahezu" Null. Somit sind die Pluskammern von Gabel und Hinterbau und die Minuskammern nur nahezu identisch. Tests haben gezeigt, daß in der Gabel, d.h. in der Kolben-/Zylinderanordnung 9 immer noch ein wenig Luft bleibt, auch wenn der Hinterbau vollständig ausgefahren ist.

Alternativ oder ergänzend zu dem elastischen Element 49 kann auch ein mechanisches Federelement, wie z.B. eine Spiralfeder oder ein vorbefüllter Druckluftzylinder, der einfach eingesetzt wird, verwendet werden. Die Spiralfeder kann entsprechend Fig. 9 zwischen dem Kolben 31 und dem Schwimmerelement 50 angeordnet sein oder zwischen dem Schwimmerelement 50 und dem lenkerseitigen Ende des Pneumatikzylinders 30.

Alternativ zu dem elastischen Element 49 kann auch ein zusätzliches Luftfederelement vorgesehen sein.

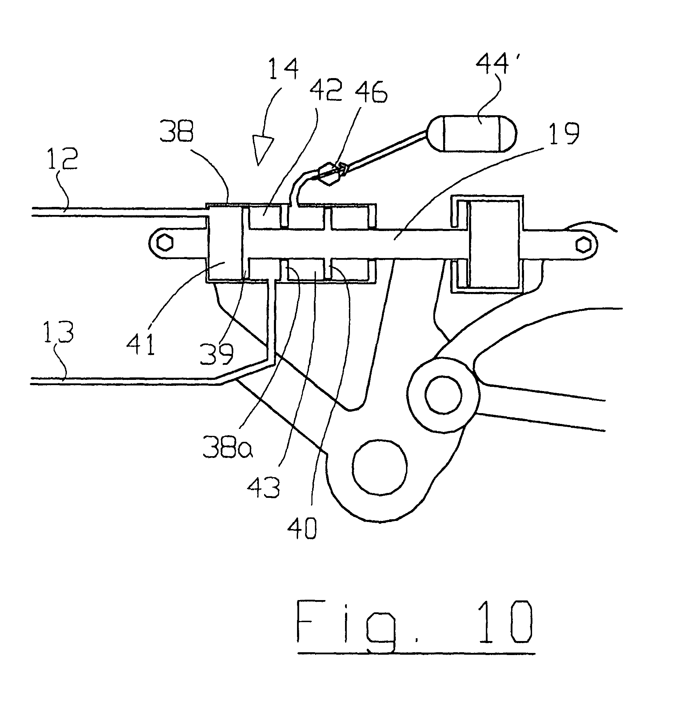

Fig. 10 zeigt eine Modifikation der Feststelleinrichtung, bei der nur die Zylinderkammer 43 über das Absperrventil 46 mit einem Hydraulikbehälter 44' verbunden ist, der beim Verschieben der Kolbenstange 19 als Ausgleichsbehälter dient. Ist das Absperrventil 46 geschlossen, so ist auch bei dieser Einrichtung aufgrund der Inkompressibilität der Hydraulikflüssigkeit die Kolbenstange 19 eindeutig fixiert.

Alternativ zu der in den Figuren 6, 7 bzw. 9 beschriebenen Kolben-/Zylinderanordnung 14 können auch andere der o.g. Ausführungsbeispiele verwendet werden.

Insbesondere ist es auch möglich, ausschließlich an der Vorderradaufhängung bzw. an der Hinterradaufhängung eine Verstelleinrichtung vorzusehen bzw. vollkommen separate Verstelleinrichtungen für die Vorderradaufhängung und die Hinterradaufhängung vorzusehen, die weder pneumatisch noch hydraulisch miteinander gekoppelt sind.

Fig. 11 zeigt eine Variante des Ausführungsbeispiels der Fig. 5, wobei hier das Zylindergehäuse 38 und das Federelement 20 über ein Schwenkgelenk 93 gelenkig miteinander verbunden sind. Das Zylindergehäuse 38 ist über den Gelenkarm 57 an einem Halteelement 94 der Verbindungsstange 4 befestigt, und der Gelenkarm 58 des Federrelements 20 ist gelenkig an der Hinterradschwinge 23 befestigt. Durch eine derartige "nichtlineare Anbringung" von Verstelleinheit und Federelement läßt sich zudem der "Anstellwinkel" des Federelements 20 progressiv bzw. degressiv ändern.

Die Verstelleinheit, d.h. das Zylindergehäuse 38 kann zusätzlich an der Verbindungsstange 4 geführt sein, z.B. durch eine Schiene o.ä.

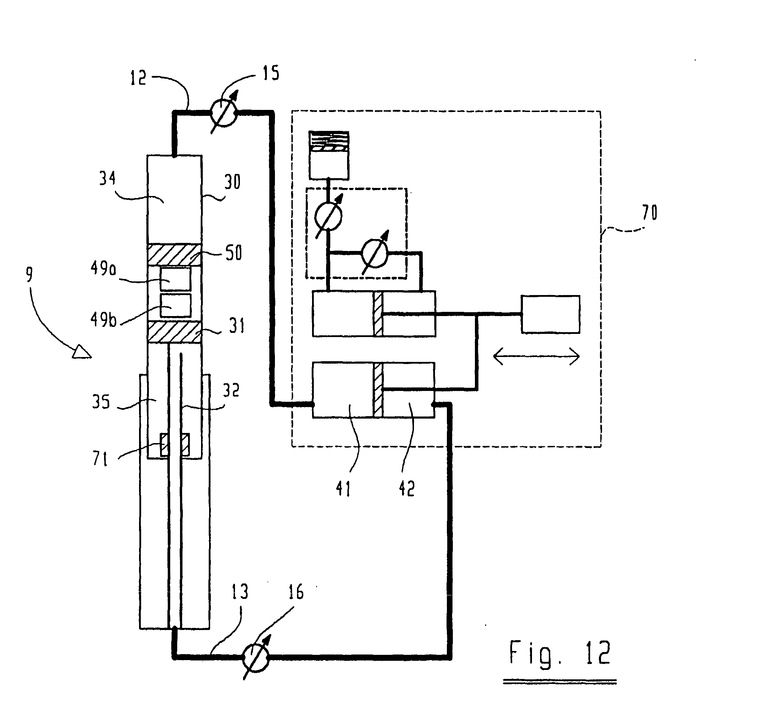

Fig. 12 zeigt ein schematisches Ausführungsbeispiel mit zwei Verstelleinrichtungen, nämlich einer Kolben-/Zylinderanordnung 9, und einer weiteren Verstelleinrichtung 70, die im wesentlichen der des Ausführungsbeispiels der Fig. 6 entspricht. Die Kolben-/Zylinderanordnung 9 kann z.B. zur Verstellung der Vorderradaufhängung und die Verstelleinrichtung 70 zur Verstellung der Hinterradaufhängung vorgesehen sein (vgl. Fig. 7). Der erste Zylinderraum 34, d.h. die Pluskammer der Kolben-/Zylinderanordnung 9 ist über die erste Druckmittelleitung 12 und das Absperrorgan 15 mit der Pluskammer 41 der Verstelleinrichtung 70 verbunden. Ferner ist der zweite Zylinderraum 35, d.h. die Minuskammer der Kolben-/Zylinderanordnung 9 über die Druckmittelleitung 13 und das Absperrorgan 16 mit der Minuskammer 42 der Verstelleinrichtung 70 verbunden.

Bei dem Ausführungsbeispiel der Fig. 12 sind im Unterschied zu Fig. 9 zwischen dem Pneumatikkolben 31 und dem Schwimmerelement 50 zwei elastische Elemente 49a, 49b angeordnet. Die elastischen Elemente 49a, 49b verbessern die Federungseigenschaften und dienen als Federung in der sog. "Uphill-Stellung", d.h. beim Bergauffahren. Beim Bergauffahren ist die Kolben-/Zylinderanordnung 9 nämlich eingefahren, d.h. der erste Zylinderraum 34 hat ein relativ kleines Volumen bzw. das Volumen Null, wobei das Schwimmerelement 50 dann am lenkerseitigen bzw. oberen Ende des Pneumatikzylinders 30 ansteht. In dieser Stellung ist der "Luftfederweg" vergleichsweise klein bzw. Null. Die elastischen Elemente 49a, 49b stellen dann eine gewisse "Restfederwirkung" sicher. Insbesondere können die elastischen Elemente 49a, 49b aus unterschiedlichem Material hergestellt sein, d.h. sie können eine unterschiedliche Federhärte aufweisen.

Ein ringförmiges elastisches Element 71 ist an der Kolbenstange 32 angeordnet und dient als Rückschlagelement in der sog. "Downhill-Stellung", in der die Kolben-/Zylinderanordnung 9 ausgefahren ist. Das elastische Element 71 verhindert, daß der Kolben 31 beim Ausfedern am unteren Ende des Pneumatikzylinders 30 anschlägt.

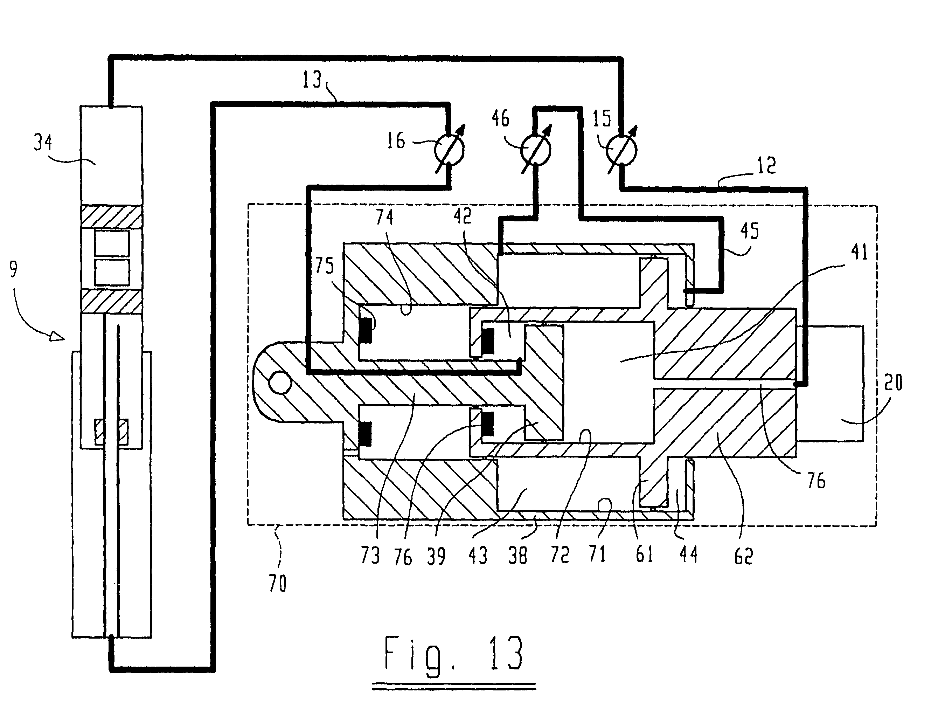

Fig. 13 zeigt ein weiteres Ausführungsbeispiel mit zwei miteinander gekoppelten Verstelleinrichtungen. Die erste Verstelleinrichtung ist durch die Kolben-/Zylinderanordnung 9 gebildet und stimmt mit der des Ausführungsbeispiels der Fig. 12 überein. Die zweite Verstelleinrichtung 70 weist ein Zylindergehäuse 38 auf, in dem das Kolbenteil 62 verschieblich geführt ist. Der Kolben 61 des Kolbenteils 62 gleitet in einer Ausnehmung 71 des Zylindergehäuses 38 und unterteilt die Ausnehmung 71 in die erste hydraulische Zylinderkammer 43 und die zweite hydraulische Zylinderkammer 44, die über die Hydraulikleitung 45 bzw. über das Absperrventil 46 miteinander verbindbar sind.

Das Kolbenteil 62 weist ferner eine innere Ausnehmung 72 auf, in der der Pneumatikkolben 39 gleitet. Der Pneumatikkolben 39 ist hier integraler Bestandteil des Zylindergehäuses 38 und unterteilt die Ausnehmung 72 in die erste pneumatische Zylinderkammer 41 bzw. "Pluskammer" und in die zweite pneumatische Zylinderkammer 42 bzw. "Minuskammer".

Das Kolbenteil 62 ist ferner gleitend an einem kolbenstangenartigen Teil 73 und an einer weiteren zylinderförmigen Ausnehmung 74 des Zylindergehäuses 38 geführt. An axialen Enden der Ausnehmungen 72 und 74 sind jeweils elastische Elemente 75 bzw. 76 angeordnet, die ein "Anschlagen" des Kolbenteils 62 am Zylindergehäuse 38 verhindern.

Die Pluskammer 41 ist über eine pneumatische Leitung 75 und eine elastische pneumatische Druckmittelleitung 12 sowie an das Absperrventil 15 mit dem ersten Zylinderraum 34, d.h. mit der Pluskammer der Kolben-/Zylinderanordnung 9 verbunden. Der zweite pneumatische Zylinderraum 42, d.h. die Minuskammer ist über die Druckmittelleitung 13 und das Absperrventil 16 mit der Minuskammer der Kolben-/Zylinderanordnung 9 verbunden. An einem Ende der Verstelleinrichtung 70 ist wie bei den Ausführungsbeispielen der Figuren 1-7 und 9 ein Federelement 20 bzw. ein Dämpfungselement vorgesehen.

Auch bei diesem Ausführungsbeispiel ist die der Pluskammer 41 zugeordnete Kolbenfläche größer als die der Minuskammer 42 zugeordnete Kolbenfläche. Folglich ergibt sich auch hier eine resultierende Axialkraft, die das Kolbenteil 62 automatisch ausfährt, wenn das Absperrventil 46 geöffnet ist und wenn man den "Pluskreislauf" über die Leitung 12 mit dem "Minuskreislauf" über die Leitung 13 verbindet. Ein hydraulisches Ausgleichsgefäß ist bei diesem Ausführungsbeispiel nicht erforderlich, da die Ringflächen der hydraulischen Zylinderräume 43, 44 dieselben Ringquerschnitte haben, d.h. das aus dem einen hydraulischen Zylinderraum abströmende Volumen strömt in den anderen hydraulischen Zylinderraum ein und umgekehrt.

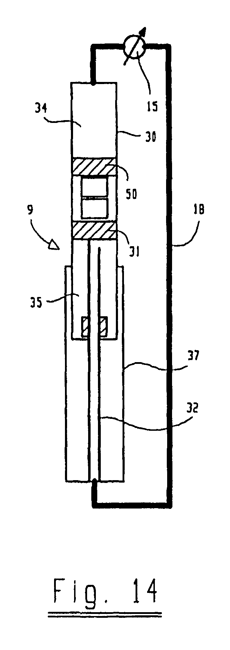

Fig. 14 zeigt ein Ausführungsbeispiel der Kolben-/Zylinderanordnung 9, bei dem die Pluskammer 34 unmittelbar über die Druckmittelleitung 12 und das Absperrventil 15 miteinander verbindbar sind. Durch Öffnen des Absperrventils 15 erfolgt ein Druckausgleich zwischen der Pluskammer 34 und der Minuskammer 35. Sofern keine äußeren Axialkräfte auf die Kolben-/Zylinderanordnung 9 ausgeübt werden, wird der Pneumatikzylinder 30 "automatisch" aus dem Führungsrohr 37 herausgedrückt. Auch hier ist nämlich die von dem in der Pluskammer 34 herrschenden Druck beaufschlagte Querschnittsfläche des Schwimmerelements 50 größer als die vom Druck der Minuskammer 35 beaufschlagte Querschnittsfläche des Kolbens 31, wobei die Querschnittsflächendifferenz der Querschnittsfläche der Kolbenstange 32 entspricht. Da nach dem Öffnen des Absperrventils 15 in der Pluskammer 34 und in der Minuskammer 35 derselbe Druck herrscht, ergibt sich eine Differenzkraft, die das Ausfahren der Kolben-/Zylinderanordnung 9 bewirkt.

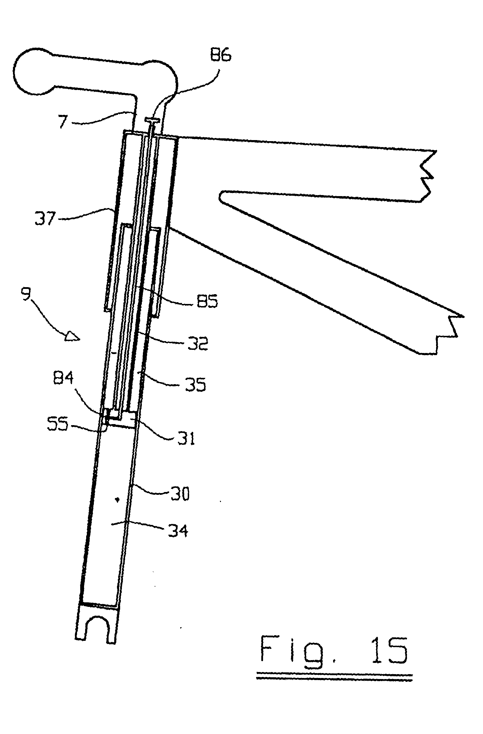

Fig. 15 zeigt eine Variante des Ausführungsbeispiels der Fig. 8. Das Führungsrohr 37 bzw. die damit verbundene Kolbenstange 32 sind hier "oben", d.h. dem Lenkervorbau 7 zugewandt angeordnet. Am "unteren" freien Ende der Kolbenstange 32 ist der Kolben 31 angeordnet, der gleitend in dem Pneumatikzylinder 30 geführt ist. Der Pneumatikzylinder 30 ist längs verschieblich in das Führungsrohr 37 eingeführt.

Der erste Zylinderraum 34, d.h. die "Pluskammer" ist durch den Pneumatikzylinder 34 und den Kolben 31 gebildet. Der zweite Zylinderraum 35, d.h. die "Minuskammer" ist ein ringförmiger Zylinderraum, der durch den Pneumatikzylinder 30, die Kolbenstange 32 und den Kolben 31 gebildet ist. Im Kolben 31 ist eine Durchgangsöffnung 55 vorgesehen, die die Pluskammer 34 und die Minuskammer 35 verbindet und die durch ein Ventil 84 öffenbar bzw. verschließbar ist. Das Ventil 84 weist eine Betätigungseinrichtung 85 auf, die bis zur Höhe des Lenkervorbaus 7 durch den Kolben 31 bzw. die Kolbenstange 32 nach oben geführt ist. In Höhe des Lenkervorbaus 7 ist ein Betätigungselement 86 vorgesehen, das hier die Form eines Schalters bzw. Zugknopfes hat. Die Betätigungseinrichtung 85 kann zum Beispiel ein BowdenZug sein. Selbstverständlich kann das Ventil 84 auch anders betätigbar sein, z.B. elektrisch, hydraulisch, pneumatisch etc.

Bei diesem Ausführungsbeispiel ist somit in besonders komfortabler Weise eine Höhenverstellung der Vordergabel vom Lenker bzw. Lenkervorbau 7 aus möglich. Selbstverständlich können auch hier noch zusätzliche Federelemente in die Pluskammer 34 eingebracht werden.

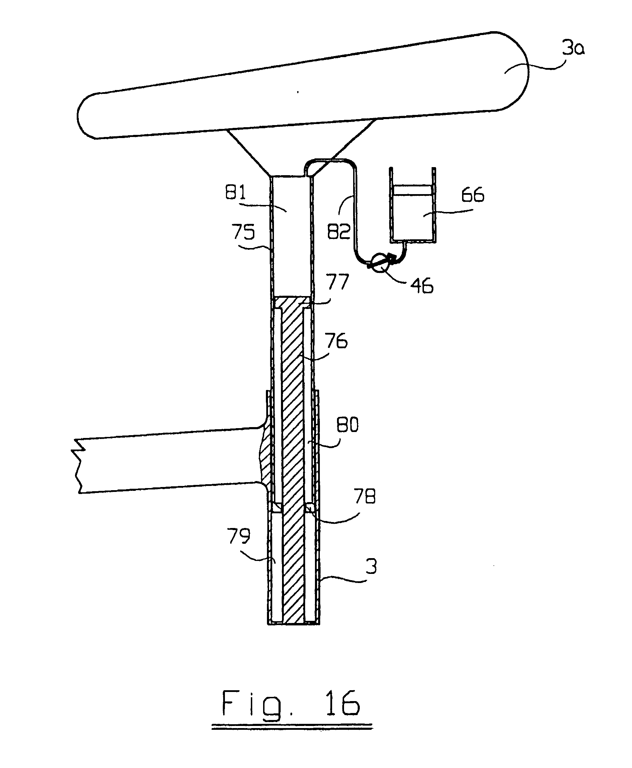

Fig. 16 zeigt ein Ausführungsbeispiel, bei der die Verstelleinrichtung zur Höhenverstellung des Sattels 3a verwendet wird. Der Sattel 3a weist ein Sattelrohr 75 auf, das in die Sattelstange 3 des Fahrradrahmens eingeschoben ist. Ferner ist eine Kolbenstange 76 vorgesehen, die hier mit der Sattelstange 3 verbunden ist und aus dieser nach oben heraussteht. Am oberen freien Ende der Kolbenstange 76 ist ein Kolben 77 vorgesehen, der in dem Sattelrohr 75 gleitet. Ferner ist am unteren freien Ende des Sattelrohrs 75 ein Kolben 78 vorgesehen, der eine Ausnehmung aufweist, durch die die Kolbenstange 76 hindurchragt. Die Sattelstange 3, die Kolbenstange 76 und der Kolben 78 bilden eine Pluskammer 79, die über eine Befülleinrichtung (nicht dargestellt) mit einem Gas bzw. mit Luft befüllbar ist. Die Kolben 77, 78, die Kolbenstange 76 und das Sattelrohr 75 bilden eine ringförmige Minuskammer 80. Entsprechend dem Ausführungsbeispiel der Fig. 1 können die Pluskammer 79 und die Minuskammer 80 über eine Durchgangsöffnung (nicht dargestellt) im Kolben 78 in Druckverbindung stehen. Sofern in der Pluskammer 79 ein Druck herrscht, der größer als der Atmosphärendruck ist, ergibt sich somit eine resultierende Axialkraft, die in Richtung des Sattels 3a wirkt. Ferner ist ein hydraulischer Zylinderraum 81 vorgesehen, der durch den Sattel 3a, das Sattelrohr 75 und den Kolben 77 begrenzt ist. Der hydraulische Zylinderraum 81 steht über eine Hydraulikleitung 82 und über ein Absperrventil 46 mit einem Ausgleichsgefäß 66 in Druckverbindung. Durch Öffnen des Absperrventils 46 wird das Sattelrohr 75 nach oben gedrückt, wodurch sich das Volumen des hydraulischen Zylinderraums 81 vergrößert und Hydraulikflüssigkeit aus dem Ausgleichsgefäß 66 nachströmt. Durch Schließen des Absperrorgans 46 wird die momentane Sattelhöhe "festgestellt".

Ferner kann eine "Verdrehsicherung" für die Sattelstange vorgesehen sein. Das Sattelrohr und die Sattelstange können z.B. eine ovale Querschnittsform haben, es kann eine extern angeordnete Führungsstange vorgesehen sein, eine Führungsnut, Kantprofil etc.

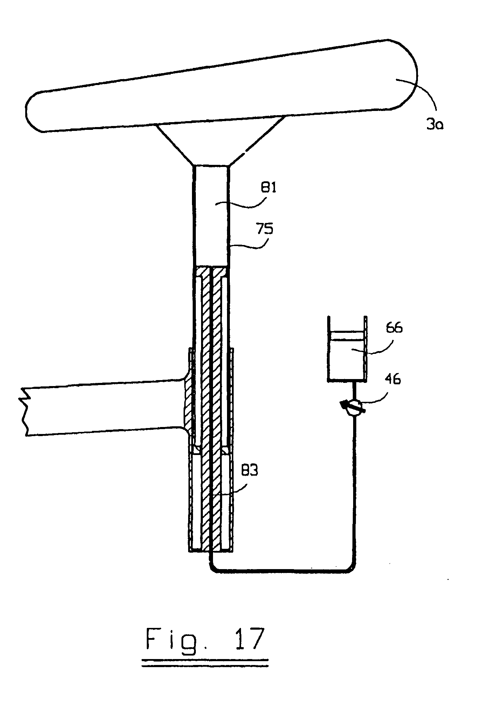

Fig. 17 zeigt eine Variante des Ausführungsbeispiels der Fig. 16. Hier steht der im Sattelrohr 75 vorgesehene hydraulische Zylinderraum 81 über eine in der Kolbenstange 76 vorgesehene Hydraulikleitung 83 und über das Absperrventil 46 mit dem Ausgleichsgefäß 66 in Verbindung. Die Funktionsweise beim Öffnen des Absperrventils 46 entspricht der des Ausführungsbeispiels der Fig. 16.

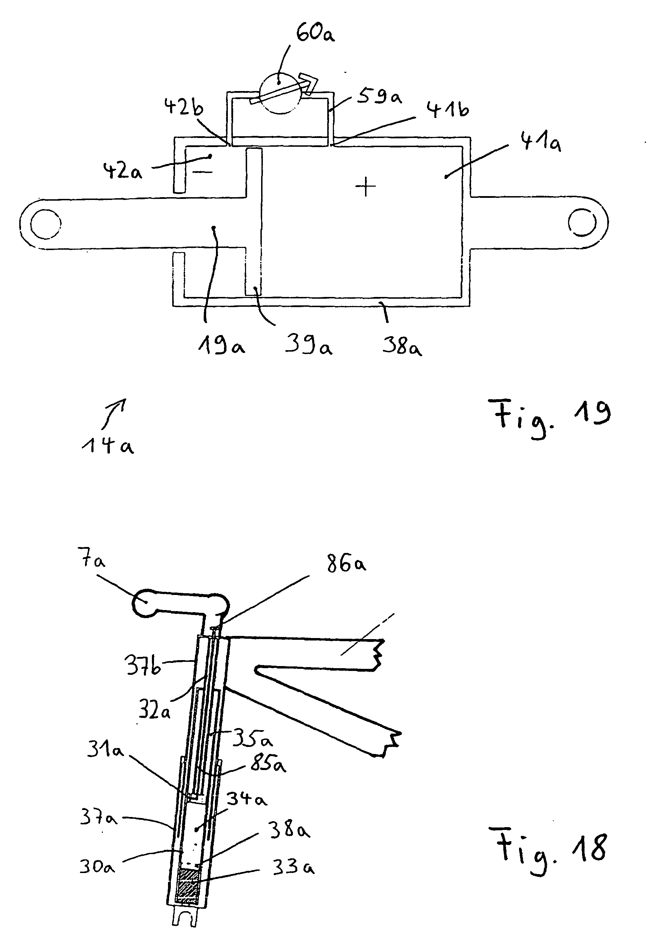

In Fig. 18 ist eine Verstelleinrichtung zur Höhenverstellung der Vorderradaufhängung eines Fahrrads gemäß einem weiteren Ausführungsbeispiel der vorliegenden Erfindung gezeigt. Ein Pneumatikzylinder 30a ist an seinem unteren Ende über eine Schraubverbindung (oder alternativ z.B. über eine Steckverbindung) an ein Führungsrohr 37a montiert. An dem Lenkervorbau 7a ist ein Rohr 37b und eine damit verbundene Kolbenstange 32a befestigt. Am unteren Ende der Kolbenstange 32a ist ein Kolben 31a angeordnet, der gleitend in dem Pneumatikzylinder 30a geführt ist. Das Rohr 37b und die Kolbenstange 32a sind gegenüber dem Führungsrohr 37a und dem Pneumatikzylinder 30a in Längsrichtung verschiebbar.

Der erste Zylinderraum 34a, d.h. die "Pluskammer" wird von dem Pneumatikzylinder 30a gebildet. Der zweite Zylinderraum 35a, d.h. die "Minuskammer" ist ein ringförmiger Zylinderraum, der durch den Pneumatikzylinder 30a, die Kolbenstange 32a und den Kolben 31a gebildet wird. Im Kolben ist eine Durchgangsöffnung vorgesehen, die den ersten Zylinderraum 34a mit dem zweiten Zylinderraum 35a verbindet, und die durch ein Ventil öffenbar oder verschließbar ist. Das Ventil ist mit einer Betätigungseinrichtung 85a verbunden, die bis zur Höhe des Lenkervorbaus 7a durch den Kolben 31a bzw. die Kolbenstange 32a nach oben geführt ist. Die Betätigungseinrichtung 85a weist in Höhe des Lenkervorbaus ein Betätigungselement 86a auf. Wird dieses betätigt, öffnet bzw. schließt das Ventil.

Am unteren Ende des Pneumatikzylinder 30a ist ein Element 33a aus elastischem Material angeordnet. Darüber befindet sich ein Schwimmerelement 38a, das den ersten Zylinderraum 34a gegenüber dem Zylinderraum abdichtet, in dem das elastische Element 33a angeordnet ist. Das Schwimmerelement kann alternativ z.B. luftdurchlässig ausgestaltet sein. Denkbar sind auch Ausführungsformen ohne Schwimmerelement.

Bei einem alternativen, hier nicht dargestellten Ausführungsbeispiel sind bei einer der in Fig. 18 gezeigten Verstelleinrichtung entsprechenden Verstelleinrichtung zusätzlich zwei Druckmittelleitungen vorgesehen, welche von der Höhe des Lenkervorbaus 7a aus durch die Kolbenstange 32a zum Kolben 31a nach unten geführt sind. Die erste Druckmittelleitung steht mit der Pluskammer 34a, und die zweite Druckmittelleitung mit der Minuskammer 35a in Verbindung. Von der in Fig. 18 gezeigten Verstelleinrichtung aus führen die Druckmittelleitungen zu einer zweiten Kolben/Zylindereinrichtung, welche z.B. entsprechend der in den Fig. 7 und 8 gezeigten zweiten Kolben/Zylindereinrichtung 14 aufgebaut sein kann. Die erste Druckmittelleitung ist mit der Pluskammer 41, und die zweite Druckmittelleitung mit der Minuskammer 42 der zweiten Kolben/Zylindereinrichtung 14 verbunden.

In Fig. 19 ist eine durch eine Kolbenzylinderanordnung 14a gebildete Verstelleinrichtung gemäß einem weiteren Ausführungsbeispiel der vorliegenden Erfindung gezeigt, die insbesondere zur Höhenverstellung der Hinterradaufhängung geeignet ist. Die Kolbenzylinderanordnung 14a weist ein Zylindergehäuse 38a auf, in dem eine Kolbenstange 19a mit einem Pneumatikkolben 39a geführt ist. Der Pneumatikkolben 39a unterteilt das Zylindergehäuse 38a in eine Pluskammer 41a und eine Minuskammer 42a. Die Pluskammer 41a ist über eine erste Öffnung 41b, und die Minuskammer 42a über eine zweite Öffnung 42b mit einer "externen" Pneumatikleitung 59a verbunden, die mit einem Absperrventil 60a geöffnet und geschlossen werden kann. Die Öffnungen 41b, 42b sind in der Mittelwand des Zylindergehäuses 38a angebracht, und zwar mit einem bestimmten Mindestabstand von den rechten und linken Zylinderenden entfernt, z.B. mehr als 2 bzw. 4 cm.

Wenn das Absperrventil 60a geschlossen ist, stellt sich am Pneumatikkolben 19a ein Kräftegleichgewicht ein, wobei der Pneumatikkolben 19a die in Fig. 19 gezeigte erste Neutralstellung einnimmt. Zur Verstellung der Verstelleinrichtung wird das Absperrventil 60a geöffnet. Dadurch werden die Pluskammer 41a und die Minuskammer 42a miteinander verbunden, so daß ein Druckausgleich zwischen den Kammern stattfinden kann. Der Pneumatikkolben 19a fährt nach links. Überstreicht er die zweite Öffnung 42b, werden die Pluskammer 41a und die Minuskammer 42a wieder voneinander getrennt. Es stellt sich am Pneumatikkolben 19a erneut ein Kräftegleichgewicht ein, wobei der Pneumatikkolben 19a eine zweite Neutralstellung einnimmt. Bei dieser ist er von der linken Seitenwand des Zylindergehäuses 38a beabstandet. Der Verstellweg ist also nach links hin begrenzt; es verbleibt - auch bei geöffnetem Absperrventil 60a - ein minimaler Federweg. Dann wird das Absperrventil 60a geschlossen.

Zum erneuten Verstellen der Verstelleinrichtung wird das Absperrventil 60a wieder geöffnet, und der Pneumatikkolben 19a nach rechts gedrückt. Im Verlauf der Bewegung nach rechts strömt Luft von der Pluskammer 41a in die Minuskammer 42a. Überstreicht der Pneumatikkolben 19a die erste Öfnung 41b, werden die Plus- und die Minuskammer 42a wieder voneinander getrennt. Der Kolben 19a kann dann nicht mehr (bzw. nur sehr schwer) weiter nach rechts gedrückt werden - der Verstellweg ist also auch nach rechts hin begrenzt. Wird das Absperrventil 60a geschlossen, stellt sich am Kolben 19a erneut ein Kräftegleichgewicht ein, wobei dieser eine dritte Neutralstellung einnimmt.

## Patentansprüche

1. Fahrrad mit einer Fahrrad-Verstelleinrichtung, insbesondere zur Höhenverstellung der Vorderradaufhängung, der Hinterradaufhängung, des Sattels bzw. des Lenkervorbaus, wobei die Verstelleinrichtung eine doppelt wirkende Kolben-/Zylinderanordnung mit einem ersten und einem zweiten Zylinderraum (33-35, 41, 42) aufweist, und die Zylinderräume mit einem Gas gefüllt sind, **dadurch gekennzeichnet, dass**
das Fahrrad außerdem eine weitere Verstelleinrichtung aufweist, die eine doppelt wirkende Kolben-/Zylinderanordnung mit einem ersten und einem zweiten Zylinderraum (34, 41, 33, 35, 42) aufweist, die mit einem Gas gefüllt sind, wobei die beiden ersten Zylinderräume (34, 41) der beiden Verstelleinrichtungen durch eine zugeordnete Druckmittelleitung (12) miteinander verbunden sind, in welcher ein Absperrorgan (15) vorgesehen ist, und wobei zusätzlich eine weitere Druckmittelleitung (13) vorgesehen ist, mit welcher die beiden zweiten Zylinderräume (33, 35, 42) der beiden Verstelleinrichtungen miteinander verbunden sind.

2. Fahrrad nach Anspruch 1, **dadurch gekennzeichnet, dass** die Druckmittelleitungen (12,13) mit einem Gas gefüllt sind.

3. Fahrrad nach einem der Ansprüche 1 oder 2, **dadurch gekennzeichnet, dass** eine Feststelleinrichtung (40, 43-46) vorgesehen ist zum Feststellen der Kolben-/ Zylinderanordnung einer Hinterradaufhängung.

4. Fahrrad nach Anspruch 3, **dadurch gekennzeichnet, dass** die Feststelleinrichtung (40, 43-46) eine doppelt wirkende Kolben-/Zylinderanordnung ist, deren Zylinderräume (43, 44) über eine Druckmittelleitung (45) und ein in der Druckmittelleitung (45) angeordnetes Absperrorgan (46) miteinander verbindbar sind.

## Claims

1. Bicycle with a bicycle adjustment device intended, in particular, for height adjustment of the front wheel suspension, the rear wheel suspension, the saddle or the handlebar stem, whereby said adjustment device has a double-action piston/cylinder arrangement with a first and a second cylinder chamber (33-35, 41, 42), and the cylinder chambers are filled with a gas, **characterized in that**
said bicycle additionally has a further adjustment device which has a double-action piston/cylinder arrangement with a first and a second cylinder chamber (34, 41, 33, 35, 42) which are filled with a gas, whereby the two first cylinder chambers (34, 41) of both adjustment devices are interconnected by an assigned hydraulic fluid line (12) in which is provided a shut-off device (15), and an additional hydraulic fluid line (13) is provided by which the two second cylinder chambers (33, 35, 42) of both adjustment devices are interconnected.

2. Bicycle according to claim 1, **characterized in that** the hydraulic fluid lines (12, 13) are filled with a gas.

3. Bicycle according to claims 1 or 2, **characterized in that** an arresting device (40, 43-46) is provided for arresting the piston/cylinder arrangement of a rear wheel suspension.

4. Bicycle according to claim 3, **characterized in that** the arresting device (40, 43-46) is a double-action piston/cylinder arrangement whose cylinder chambers (43, 44) are interconnectable by a hydraulic fluid line (45) and a shut-off device (46) disposed in said hydraulic fluid line (45).

## Revendications

1. Bicyclette munie d'un dispositif de réglage de bicyclette, destiné en particulier à ajuster la hauteur de la suspension avant, de la suspension arrière, de la selle et/ou de la saillie du guidon, ledit dispositif de réglage étant équipé d'un ensemble pistons-vérins à double effet qui comprend une première et une deuxième chambre de vérin (33-35, 41, 42) remplies d'un gaz, **caractérisée en ce que** :
ladite bicyclette présente en outre un autre dispositif de réglage équipé d'un ensemble pistons-vérins à double effet et comprenant une première et une deuxième chambre de vérin (34, 41, 33, 35, 42) remplies d'un gaz, les deux premières chambres de vérin (34, 41) des deux dispositifs de réglage étant reliées entre elles par une conduite hydraulique (12) affectée à ce fin, dans laquelle est disposé un organe d'arrêt (15), et étant affectée en outre une autre conduite hydraulique (13) destinée à relier entre elles les deux deuxièmes chambres de vérin (33, 35, 42) des deux dispositifs de réglage.

2. Bicyclette selon la revendication 1, **caractérisée en ce que** les conduites hydrauliques (12, 13) sont remplies d'un gaz.

3. Bicyclette selon l'une quelconque des revendications 1 ou 2, **caractérisée en ce qu'**il est prévu un dispositif de blocage (40, 43-46) servant à bloquer l'ensemble pistons-vérins d'une suspension arrière.

4. Bicyclette selon la revendication 3, **caractérisée en ce que** le dispositif de blocage (40, 43-46) est un ensemble pistons-vérins à double effet dont les chambres de vérin (43, 44) sont reliées entre elles par une conduite hydraulique (45) et un organe d'arrêt (46) disposé dans ladite conduite hydraulique (45).
